(19) **Europäisches Patentamt / European Patent Office / Office européen des brevets**

(11) **EP 3 535 873 B1**

(12) **EUROPEAN PATENT SPECIFICATION**

(45) Date of publication and mention
of the grant of the patent:
**05.07.2023 Bulletin 2023/27**

(21) Application number: **17867606.0**

(22) Date of filing: **01.11.2017**

(51) International Patent Classification (IPC):
**H04B 7/185** *(2006.01)*

(52) Cooperative Patent Classification (CPC):
**H04B 7/1851**

(86) International application number:
**PCT/US2017/059561**

(87) International publication number:
**WO 2018/085424 (11.05.2018 Gazette 2018/19)**

(54) **METHODS AND SYSTEMS USING AN AGILE HUB AND SMART CONNECTIVITY BROKER FOR SATELLITE COMMUNICATIONS**

VERFAHREN UND SYSTEME UNTER VERWENDUNG EINES AGILEN HUBS UND INTELLIGENTEN KONNEKTIVITÄTSAGENTEN FÜR DIE SATELLITENKOMMUNIKATION

PROCÉDÉS ET SYSTÈMES UTILISANT UN CONCENTRATEUR AGILE ET UN COURTIER DE CONNECTIVITÉ INTELLIGENTE POUR COMMUNICATIONS PAR SATELLITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2016 US 201662415983 P**
**31.10.2017 US 201715799999**

(43) Date of publication of application:
**11.09.2019 Bulletin 2019/37**

(73) Proprietor: **Kymeta Corporation**
**Redmond, Washington 98052 (US)**

(72) Inventors:
• **SMOOT, Max**
**Redmond, Washington 98052 (US)**

• **STEVENSON, Ryan**
**Redmond, Washington 98052 (US)**
• **MARKS, Bill**
**Redmond, Washington 98052 (US)**

(74) Representative: **Viering, Jentschura & Partner mbB**
**Patent- und Rechtsanwälte**
**Am Brauhaus 8**
**01099 Dresden (DE)**

(56) References cited:
EP-A2- 1 137 197     US-A- 4 455 651
US-A- 5 634 190      US-A- 6 070 051
US-A- 6 091 933      US-A1- 2011 143 656
US-A1- 2014 315 560  US-A1- 2016 037 434
US-B1- 6 522 865     US-B2- 6 708 019

**Description**

**FIELD**

Examples of the invention are in the field of communications including satellite communications and antennas. More particularly, examples of the invention relate to an agile hub for satellite communications.

**BACKGROUND**

Satellite communications involve transmission of microwaves. Microwaves can have small wavelengths and be transmitted at high frequencies in the gigahertz (GHz) range. Satellite antennas can produce focused beams of high-frequency microwaves that allow for point-to-point communications having broad bandwidth and high transmission rates. A satellite antenna can communicate with any number of satellites across multiple geographic regions. Such satellites can include geo-stationary (GEO), medium earth orbit (MEO), and low earth orbit (LEO) satellites providing satellite communications at varying orbits and distances form the surface of the earth. Such satellites and antennas can move across geographic locations and proper connectivity between the satellites and antennas is necessary for accurate satellite communications.

US 2016/0037434 A1 describes approaches for an SDSN that employs satellite network nodes, where central L2 network nodes are controlled via a centralized Controller. Link status information is obtained regarding links of each L2 node. Global routing constraints, satellite ephemeris data, and resource allocation information are obtained. A constellation topology of the network nodes is determined based on the ephemeris data. Network routes between pairs of endpoints are determined. Each route includes links based on the link status information regarding the links, the global routing constraints, the bandwidth resources of the links and the current allocation of bandwidth resources, and/or the constellation topology. A forwarding table is generated for each network node, wherein each forwarding table includes route entries providing a next hop indicating a destination for data packets, wherein the destination is associated with a link of the respective network node that represents a link of a respective route.

US 6 070 051 A describes a method and apparatus that predicts a ground-to-satellite terminal's percentage of successful communication linkage time to at least one satellite of a communication system in response to a terminal blockage profile, as created from the location of an antenna of the terminal, and a satellite blockage profile. The prediction may also be based upon a weather model data base corresponding to the area where the terminal is located.

US 2014/0315560 A1 describes the dynamic allocation of wireless spectrum for utilization by operator networks.

US 2011/0143656 A1 describes methods and apparatus for maximizing the availability of a high-rate satellite communication.

**SUMMARY**

The problems of the related art are solved by an agile hub for satellite communications in accordance with the independent claim. Preferable embodiments may include the additional features in accordance with one or more of the dependent claims.

**BRIEF DESCRIPTION OF THE DRAWINGS**

The present invention will be understood more fully from the detailed description given below and from the accompanying drawings of various examples and examples which, however, should not be taken to the limit the invention to the specific examples and examples, but are for explanation and understanding only.

FIG. 1 illustrates one example of a satellite system using a hub to plan and facilitate RF links for a terminal with a satellite constellation of a geographic region.
FIG. 2A illustrates one example of crosslink command messaging for the agile hub system of FIG. 1.
FIGS. 2B-2C illustrate one example of Rx make before Tx break command messaging for the agile hub system of FIG. 1.
FIG. 3 illustrate one example block diagram of a computer or computing system for the hub of FIGS. 1-2C.
FIG. 4A illustrates one example flow diagram of an Operation for the hub of FIGS. 1-3.
FIG. 4B illustrates one example flow diagram of an Rx make before Tx break Operation for the hub of FIGS. 1-3.
FIGS. 4C-4D illustrate one example of a flow diagram of a hub beam priority selection Operation.
FIG. 4E illustrate one example of a flow diagram of a remote beam priority selection operation.
FIG. 4F illustrates one example of a spatial multicarrier Operation hub planning timing windows.
FIG. 4G illustrates one example of a spatial multicarrier Operation terminal sequence timing windows.
30 FIG. 4H illustrates one example of a standards spatial multicarrier Operation timing windows.
FIGS. 4I-4J illustrates one example of a flow diagram of a spatial multicarrier FWD Operation with multiple links.
**FIGS. 4K-4L** illustrates one example of a flow diagram of a spatial multicarrier RTN operation with multiple links.
**FIG. 4M** illustrates one example block diagram of a state machine for tracking states. **FIG. 5A** illustrates a top view of one example of a coaxial feed that is used to provide a cylindrical wave feed.

**FIG. 5B** illustrates an aperture having one or more arrays of antenna elements placed in concentric rings around an input feed of the cylindrically fed antenna according to one example.

**FIG. 6** illustrates a perspective view of one row of antenna elements that includes a ground plane and a reconfigurable resonator layer according to one example.

**FIG. 7** illustrates one example of a tunable resonator/slot.

**FIG. 8** illustrates a cross section view of one example of a physical antenna aperture.

**FIGS. 9A-9D** illustrate one example of the different layers for creating the slotted array.

**FIG. 10A** illustrates a side view of one example of a cylindrically fed antenna structure.

**FIG. 10B** illustrates another example of the antenna system with a cylindrical feed producing an outgoing wave.

**FIG. 11** shows an example where cells are grouped to form concentric squares (rectangles).

**FIG. 12** shows an example where cells are grouped to form concentric octagons.

**FIG. 13** shows an example of a small aperture including the irises and the matrix drive circuitry.

**FIG. 14** shows an example of lattice spirals used for cell placement.

**FIG. 15** shows an example of cell placement that uses additional spirals to achieve a more uniform density.

**FIG. 16** illustrates a selected pattern of spirals that is repeated to fill the entire aperture according to one example.

**FIG. 17** illustrates one embodiment of segmentation of a cylindrical feed aperture into quadrants according to one example.

**FIGS. 18A** and **18B** illustrate a single segment of **FIG. 17** with the applied matrix drive lattice according to one example.

**FIG. 19** illustrates another example of segmentation of a cylindrical feed aperture into quadrants.

**FIGS. 20A** and **20B** illustrate a single segment of **FIG. 19** with the applied matrix drive lattice.

**FIG. 21** illustrates one example of the placement of matrix drive circuitry with respect to antenna elements.

**FIG. 22** illustrates one example of a TFT package.

**FIGS. 23A** and **23B** illustrate one example of an antenna aperture with an odd number of segments.

## DETAILED DESCRIPTION

Methods and systems using an agile hub and smart connectivity broker for satellite communications are described. In one example, a hub for satellite communications includes an interface to facilitate satellite communications between a terminal and satellites in a constellation for a geographic region, and one or more processors coupled to the interface. The terminal includes one or more antennas. Each antenna having an aperture with a receive portion to receive radio frequency (RF) signals and a transmit portion to transmit RF signals. The one or more processors are configured to implement a broker for the hub. The broker is to plan and facilitate RF links between the terminal and satellites across LEO, MEO, and GEO constellations servicing that terminal based on one more characteristics for satellite communications. In one example, the terminal is a ground-based terminal or a mobile-based terminal on a vehicle, aircraft, marine vessel, or movable machine or object.

In one example, the broker can schedule antenna pointing transitions for the at least one aperture antenna of the terminal from one or more satellites to another satellite or set of satellites. The broker can synchronize a crosslink switch such that the receive portion of the aperture of the one or more antennas receives RF signals from a first satellite and the transmit portion of the aperture of the one or more antennas transmits RF signals to a second satellite.

In one example, the broker is to connect to a capacity market to make offers on bids for the terminal from spectrum providers operating satellites or terrestrial links in the geographic region. The offers can be based on rules by an operator of the hub or sent directly by the operator of the hub. The broker for a winning bid can broker a service and transition RF links for the terminal through a selected satellite. The broker can receive bids including a spectral price, guaranteed link capacity, estimated link capacity, minimum duration of capacity, expected duration of capacity, or transponder identifier including a satellite identifier. The broker can generate the offers on the bids based on user preferences, price, provider profile, and quality of service estimates. The broker can map and predict RF link performance between the terminal and known satellites for the geographic region. The broker can also aggregate historical data from terminal reports, up-to-date satellite locations and RF characteristics including terminal gain-to-noise-temperature G/T and effective isotropic radiated power EIRP of a target satellite and adjacent satellites, and measured atmospheric conditions.

In the following description, numerous details are set forth to provide a more thorough explanation of the present invention. It will be apparent, however, that the present invention may be practiced without these specific details. In other instances, well-known structures and devices are shown in block diagram form, rather than in detail, in order to avoid obscuring the present invention.

Some portions of the detailed description that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

## Exemplary Agile Hub Satellite Communication System (Agile Hub Basic Operation and Scheduling)

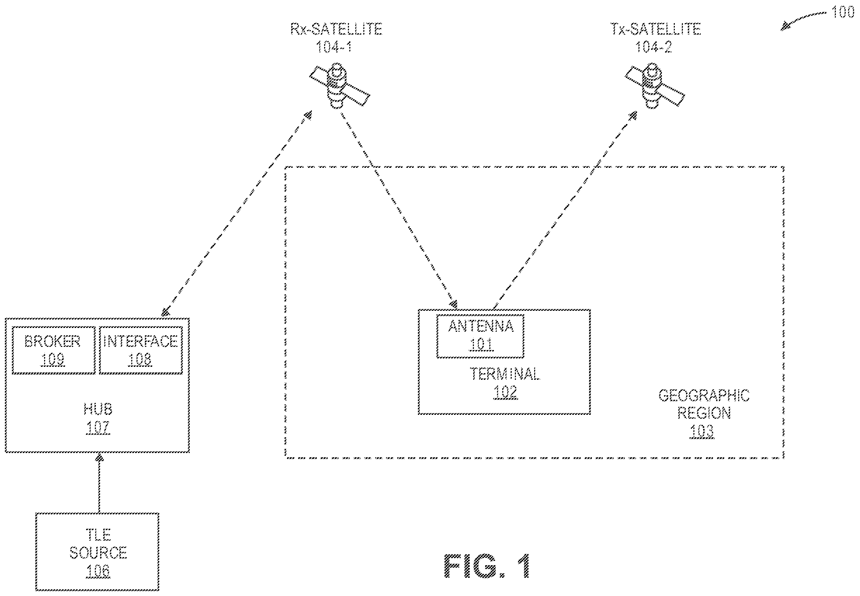

FIG. 1 illustrates one example of a satellite system 100 includes a hub 107 having an interface 108 and broker 109. Referring to FIG 1, in one example, interface 108 of hub 107 communicates with Rx-satellite 104-1, which can communicate with terminal 102. Hub 107 can communicate with any number of satellites via interface 108 which can include a modem operating with satellites for geographic region 103. In one example, terminal 102 can operate as a crosslink to receive RF signals from Rx-satellite 104-1 and to transmit RF signals to Tx-satellite 104-2. In one example, broker 109 of hub 107 plans and facilitates radio frequency (RF) communication links for terminal 102 with satellites in a satellite constellation for geographic region 103. For example, broker 109 for hub 107 can automatically schedule when antenna 101 for terminal 102 should transition RF links with one or more satellites to other satellites or sets of satellites, e.g., Rx-satellite 104-1 and Tx-satellite 104-2.

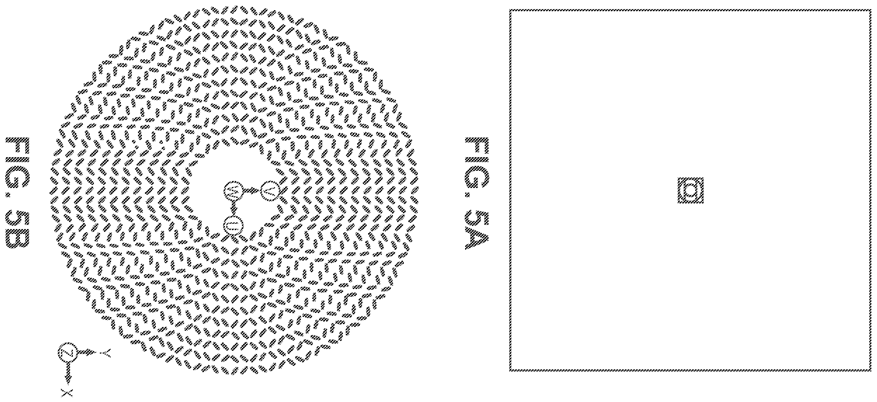

In one example, terminal 102 can be a ground-based terminal or a mobile-based terminal (e.g., a terminal on a vehicle, aircraft, marine vessel, movable machine or object, etc.) having antenna 101 to communicate on any number RF links with satellites for geographic region 103 such as, e.g., Rx-satellite 104-1 and Tx-satellite 104-2. In one example, antenna 101 for terminal 102 can include flat panel antennas as disclosed in FIGS. 5A-23B having arrays of radiating cells for receiving RF signals and arrays of radiating cells for transmitting RF signals. For example, using the arrays of cells, antenna 101 for terminal 102 can produce a steerable beam for an uplink antenna communication with Tx-satellite 104-2 and a steerable beam for a downlink antenna communication with Rx-satellite 104-1. In one example, the portion (or sub-array) of antenna 101 for receiving RF signals and the portion (or sub-array) of antenna 101 for transmitting RF signals can operate independently of each other. Referring to FIG. 1, although a single antenna 101 is shown for terminal 102, any number of antenna can be used for terminal 102 which can have an aperture as disclosed in FIGS. 5A-23B.

Rx-satellite 104-1 and Tx-satellite 104-2 can be any type of satellite such as a geo-stationary (GEO) satellite, medium earth orbit (MEO) satellite, or low earth orbit (LEO) satellite which can service any number of terminals including terminal 102. GEO satellites orbit tens of thousands of miles above the surface of the earth above the equator following the direction of the rotation of the earth. MEO satellites orbit within a few thousand miles above the surface of the earth, while LEO satellites orbit a few hundred miles above the surface of the earth. Terminal 102 can communicate with such satellites using any type of satellite communication protocol such as time division multiple access (TDMA). For TDMA, any number of terminals including terminal 102 can transmit or receive RF signals on the same frequency range in different time periods so as not to interfere with other terminals. In this way, terminal 102 can share the same frequency range or band with other terminals using different time slots to communicate with satellites in geographic location 103 such as Rx-satellite 104-1 and Tx-satellite 104-2. Geographic region 103 can cover any area in which GEOs, MEOs, or LEOs provide satellite communications.

In one example, hub 107 can include a computer (or data processing or computing system) to implement broker 109 in hardware and/or software or a combination of both to perform the brokering and scheduling techniques described herein. Hub 107 includes interface 108 which can include a modem or a transceiver to provide modem and wired or wireless communication with terminal 102 and can be coupled to any number of networks such as local area networks (LANs) or wide area networks (WANs) such as the Internet. Hub 107 can also be part of a network management system (NMS).

In one example, hub 107 can have an antenna and can communicate with terminal 102 and Rx-satellite 104-1 and Tx-satellite 104-2 using RF signals or other communication signals. In one example, broker 109 can send a timing and capacity plan to terminal 102 via interface 108 to establish RF links and communication with Rx-satellite 104-1 and Tx-satellite 104-2. Although a single terminal and two satellites are shown in FIG. 1, hub 107 and broker 109 can service any number of terminals for any number of satellites in a satellite constellation for geographic location 103 servicing the terminals. In other examples, broker 109 can be a separate device, computer, or server coupled with hub 107. Hub 107 can also be coupled with any number of other hubs within a network management system NMS.

In one example, hub 107 can be coupled or contain an ephemeris source 106 providing information or data related to finding an orbit and location of a satellite at any given point in time. For example, ephemeris source 106 can provide location information for Rx-satellite 104-1 and Tx-satellite 104-2. In one example, ephemeris source 106 can be a server and/or database including mathematical models to determine the orbit and location of satellites in a constellation for geographic location 103. In one example, ephemeris source 106 includes a database for broker 109 of hub 107 to access in order to establish RF communication links with Rx-satellite 104-1 and Tx-satellite 104-2. In one example, broker 109 can plan and facilitate RF link connections for terminal 102 to satellites 104-1 and 104-2 providing the necessary RF communication capabilities based on any number of factors.

For example, to schedule which RF links terminal 102 should use for Rx and Tx communications using antenna 101, broker 109 can consider factors such as service cost, security, satellite preference and lockout, location and RF characteristics of alternate terminals, data type and priority, and known adjacent satellites. Other examples of factors include known channel impairments including weather, geographic features, and line-of-sight (LOS) obstructions. Characteristics of target satellites, such as available capacity, orbital path/ephemeris data, transmit and receive frequencies, per-bit delivery cost, effective isotropic radiated power (EIRP), and terminal gain-to-noise-temperature (G/T) can be other factors. In one example, recorded EIRP and G/T data may be updated based on trends in historical performance. Other factors can include known adjacent satellites, data type and priority, individual terminal characteristics including projected path of the terminal (e.g., terminal 102 on a vehicle), scan roll-off, operating frequencies, link capacity, and modulation and coding capabilities, location and RF link characteristics of alternate terminals, satellite preference and lockout, security, capacity cost, and subscription preference derived from service agreements from, historical remote terminal demand profiles, and data remaining on subscription packages can be other factors considered by broker 109 for hub 107.

### (Agile Hub Capacity Market)

Referring to **FIG. 1,** hub 107 can connect to a capacity market which can include a capacity (or connectivity) broker to determine and identify satellite availability and options for satellites in a servicing hub 107 in geographic region 103 for terminal 102. In one example, broker 109 for hub 107 makes offers on bids received from a number of sources including spectrum providers or terrestrial links in geographic region 103. Broker 107 can create an offer for a bid based on rules set by the operator of hub 107 or may be sent directly by the operator of hub 107 to the capacity market broker. In one example, if a bid is accepted for a satellite, broker 109 for hub 107 brokers a service and transitions RF links for terminal 102 (or other terminals) through a selected satellite such as Rx-satellite 104-1. In one example, broker 109 can receive bids with options, e.g., with a spectral price, guaranteed link capacity, estimated link capacity, minimum duration of capacity, expected duration of capacity, transponder identifier. In one example, additional information regarding a transponder can be available from a central database, from historical data, or from an addendum to the bid. In a SatCom scenario, a satellite identifier (ID) can also be included in the bid. In another example, a subset of options can be provided in a bid to broker 109.

In one example, broker 109 for hub 107 can generate offers for bids based on user preferences, price

provider profile, and quality of service estimates. Quality of service estimates can include jitter, latency, and packet loss. In one example, hub 107 can map and predict RF link performance between terminal 102 and known satellites, e.g., Rx-satellite 104-1 and Tx-satellite 104-2. Broker 109 can aggregate historical data from one or more of terminal reports, up-to-date satellite locations, and RF characteristics such as terminal gain-to-noise-temperature G/T and effective isotropic radiated power EIRP of the target satellite and adjacent satellites, and measured atmospheric conditions. Terminal reports for broker 109 of hub 107 can include geographic location or region (e.g., geographic region 103), time, channel settings, satellite ID, pointing parameters, estimated transmit power, and received signal power. In one example, broker 109 can provide alerts if a prolonged inconsistency in RF link performance is observed for terminal 102 and one or more satellites such as Rx-satellite 104-1 and Tx-satellite 104-2. Such alerts can identify potential blockages, unreported weather shifts, or interferers. This information can be used by hub 107 for future capacity evaluation and network balancing. Based on the RF link performance observed, broker 109 can transition RF links for terminal 102 to one or more other satellites or sets of satellites having desired RF characteristics.

### Agile Hub Crosslinking and Transitioning

Referring to **FIG. 1,** in one example, broker 109 for hub 107 can use precise satellite orbit and location information from ephemeris source 106 to mitigate adjacent satellite interference for terminal 102. For example, broker 109 can instruct terminal 102 to have its antenna 101 point and have RF links with satellites in a crosslinked manner to receive RF signals from a Rx-satellite and to transmit RF signals to a Tx-satellite. In one example, based on any of the factors described herein, broker 109 can identify Rx-satellite 104-1 and Tx-satellite 104-2 as the desired satellites for crosslinking satellite communications. For example, antenna 101 for terminal 102 can be a single aperture antenna including a receive portion to receive RF signals from Rx satellite 104-1 and a transmit aperture portion to transmit RF signals to Tx-satellite 104-2. In other examples, antenna 101 can be a multiple aperture antenna with receive and transmit portions. In one example, broker 109 plans and commands terminal 102 to operate as a crosslink between Rx-satellite 104-1 and Tx-satellite 104-2 within geographic location 103. In other examples, broker 109 can identify other satellites in geographic location 103 for crosslinking based on any of the planning and arbitrating techniques disclosed herein to transition from Rx-satellite 104-1 and Tx-satellite 104-2 for terminal 102.

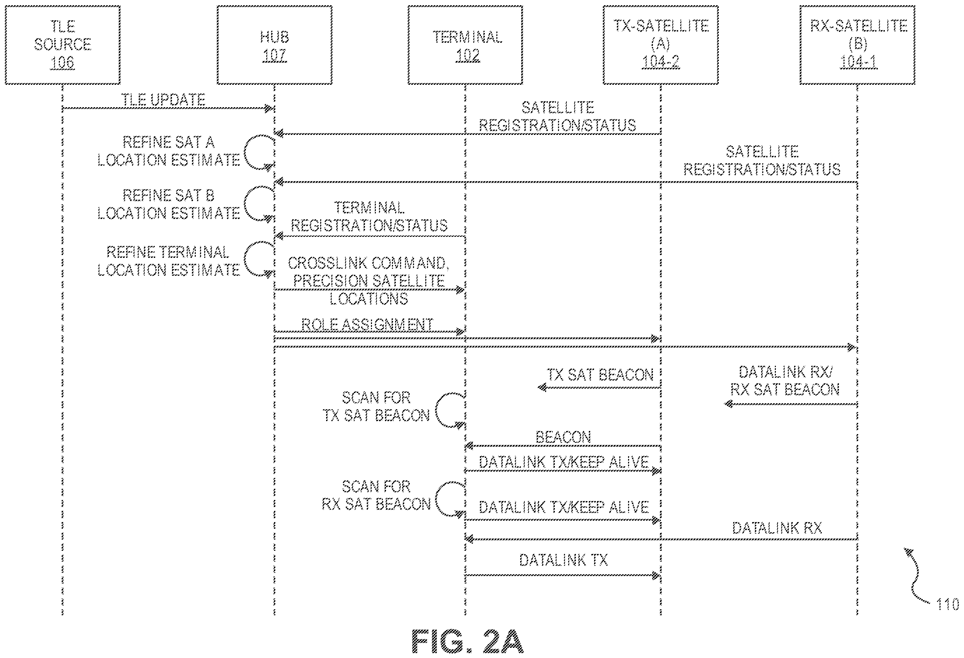

FIG. 2A illustrates one example of crosslink command messaging 110 for agile hub system 100 of **FIG. 1** including ephemeris source 106, hub 107 using broker 109, terminal 102, Tx-satellite (A) 104-2, and Rx-satellite (B) 104-1. In one example, crosslink command messaging 110 can be used to establish an initial crosslink between terminal 102 and Tx-satellite 104-2 (satellite A) and Rx-satellite 104-1 (satellite B). In one example, any number of hub systems can be sending registration and status information to hub 107 via network management system NMS, which can determine which satellites become a Tx-satellite and a Rx-satellite for terminal 102. Messages can be sent as packets (or frames) using any type of satellite communication protocol including TDMA protocols.

Referring to **FIG. 2A,** ephemeris source 106 can send a ephemeris update to hub 106 providing exact satellite location information for satellites A and B. Terminal 102 and satellites A and B (104-2, 104-1) can send registration and status information to hub 107 to configure the hub-side modem (hub 107) to operate with and service Satellites A and B. In one example, terminal 102 communicates information with hub 107 via a satellite such as Rx-satellite 104-1. In other examples, hub 107 and terminal 102 can communicate over any type of network including a network management system NMS. Based on received registration and status information and ephemeris update from ephemeris source 106, hub 107 by way of broker 109 can refine location estimates for terminal 102 and satellites A and B. Hub 107 can send crosslink command messages to terminal 102, Tx-satellite (A) 104-2, and Rx-satellite (A) 104-1. In one example, hub 107 sends precise satellite orbit and location information to terminal 102 based on ephemeris source 106. Hub 107 can determine that satellite A (104-2) can be a Tx-satellite for terminal 102 to establish an RF link and send RF signals to satellite A via antenna 101. Hub 107 can also determine that satellite B (104-1) can be a Rx-satellite for terminal 102 to establish an RF link and receive RF signals from satellite B via antenna 101. In one example, hub 107 sends role assignments to satellites A and B indicating that satellite A is to be a Rx-satellite and satellite B is to be a Tx-satellite for terminal 102.

After role assignments, in one example, satellites A and B (104-2, 104-1) can send beacon messages for terminal 102 to recognize hub 107. In one example, terminal 102 can scan for the beacon messages from satellites A and B using an RF antenna 101 such as those described herein and in **FIGS. 5A-23B.** Terminal 102 can send datalink Tx/keep alive messages to satellite A and receive datalink Rx messages from satellite B. In one example, the initial crosslink command messaging 110 can occur with previously existing satellites not shown and different from satellites A and B in different locations and orbits.

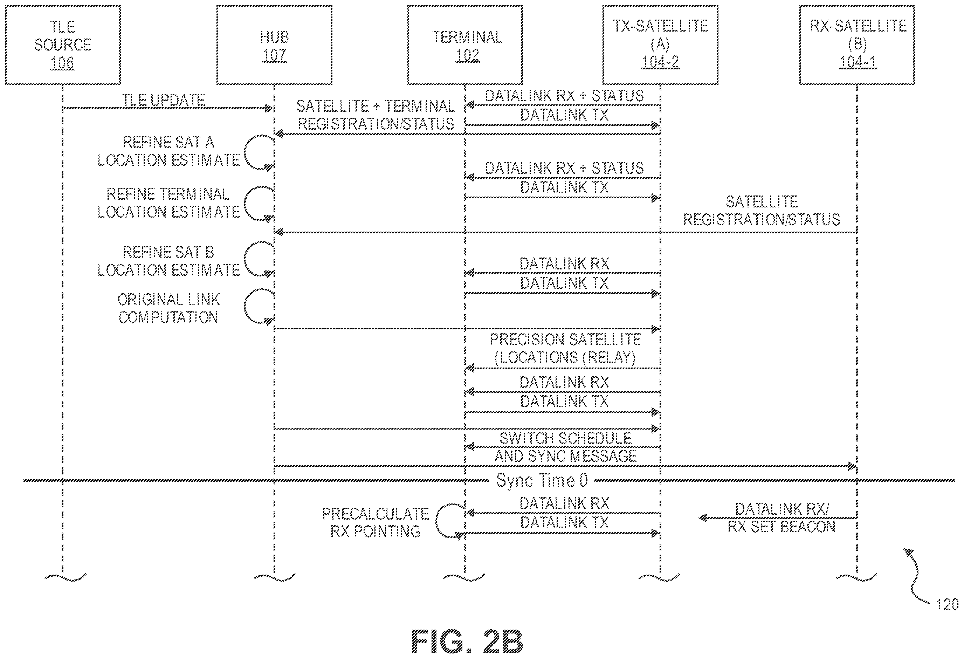

**FIGS. 2B-2C** illustrates one example of an Rx-make before Tx-break command messaging 120 for the agile hub system of **FIG. 1** including ephemeris source 106, hub 107, terminal 102, and satellites A and B (104-2, 104-1). In one example, Rx-make before Tx-break command messaging 120 can be implemented for antenna 101 having at least one aperture (and can have multiple apertures) of terminal 102 to maintain data integrity during satellite transitioning, e.g., transitioning Tx-satellite 104-2 to become a Rx-satellite or transitioning Rx-satellite 104-1 to become a Tx-satellite for terminal 102.

In this transitioning, referring to **FIG. 2B,** in one example, ephemeris source 106 sends ephemeris update information to hub 107, which receives registration and status messages from terminal 102 and satellites A and B (104-2, 104-1). Terminal 102 can send datalink TX messages to satellite A and satellite A can send datalink Rx messages to terminal 102 and precision satellite location messages. Broker 109 for hub 107 can refine location estimates for terminal 102 and satellites A and B based on the received registration and status messages and ephemeris information from ephemeris source 106 and perform an optimal link computation. For example, such computation can determine that optical RF links for Rx and Tx satellite communications for terminal 102 should change for the satellites A and B. In one example, computation information can be forwarded to terminal 102 and satellite A, and satellite A can send precision satellite location information to terminal 102. Hub 107 can send switch schedule to satellite A such that satellite A switches from a Tx-satellite receiving RF signals from terminal 102 to a Rx-satellite to send RF signals to terminal 102. Hub 107 can send a sync message to satellite B that satellite A is to become an Rx-satellite and satellite B is to become a Tx-satellite. In one example, broker 109 for hub 107 can send sync messages to satellites A and B for transitioning.

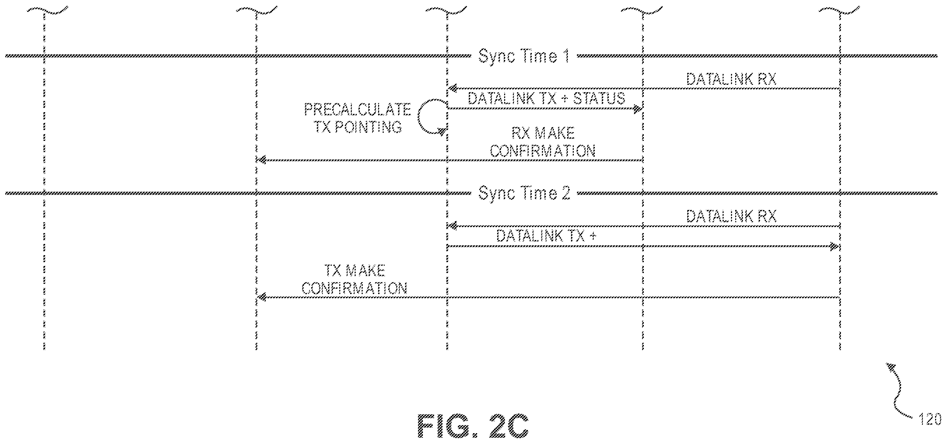

Referring to **FIG. 2B,** in one example, the transitioning can occur in three sync periods (sync time 0, 1, and 2). During sync time 0, in one example, terminal 102 performs a pre-calculate Rx pointing computation. Terminal 102 also receives datalink Rx messages from satellite A and sends datalink Tx messages to satellite A. Satellite B can send datalink Rx messages and a Rx satellite beacon which can be received by hub 107 and terminal 102. Referring to **FIG. 2C,** during sync time 1, in one example, terminal 102 performs a pre-calculate Tx pointing computation and can send a datalink Tx and status message to satellite A. Satellite A can send an Rx make confirmation message to hub 107 and a datalink Rx message can be sent from satellite B to terminal 102. During sync time 2, in one example, the hub modem servicing satellite B can send a Tx make confirmation message to hub 107 and terminal 102 can receive a datalink Rx message from satellite B and send a datalink Tx message to satellite B. In the example of **FIGS. 2B-2C,** Rx make confirmation and Tx make confirmation can be embedded in respective status messages. In this manner, the crosslink for terminal 102 can switch from satellite A as a Tx-satellite to a Rx-satellite and from satellite B as a Rx-satellite to a Tx-satellite.

In one example, for the sync process, hub 107 can generate a common clock to sync hub 107, satellites A and B (104-2, 104-1), and terminal 102. In one example, hub 107 can command a depth of bit interleaving across multiple packets (messages) to mitigate the risk on unrecoverable data losses during the crosslink transition between satellites A and B. In one example, the agile hub system 101 can include functionality such as seamless connectivity with any satellite including satellite A and B, satellite switching or tracking (e.g., MEO or LEO satellite switching or tracking), smart connections, choosing best satellite connectivity at any point in time, e.g., every 10 milliseconds for any terminal including terminal 102, transmit on one satellite (e.g., satellite B) and receive on another (e.g., satellite A), and combining and aggregating satellites with a smart connectivity broker (e.g., broker 109) as described herein.

## Agile Hub for Multiple Antenna Terminal

In one example, referring to **FIG. 1,** agile hub system 100 is capable of arbitrating multiple antennas each having an aperture (e.g., as disclosed in **FIGS. 5A-23B),** which can include an array utilizing spatial and spectral diversity to maximize terminal availability. In one example, system 100 is capable of routing in bent-pipe fashion a communication link from one target satellite to a different target satellite with independent link characteristics, e.g., GEO v. MEO/LEO, spectral diversity, etc. In one example, broker 109 for hub 107 can identify crosslinking opportunities either from external queuing (e.g., a central hub, or satellite) or from an internal determination. In one example, broker 109 can use interference mitigation techniques at the terminal level and may use antenna re-weighting/antenna selection in determining crosslinking opportunities for terminal 102 and determining which satellites to use for Rx and Tx satellite communications.

In one example, for agile hub system 100, terminal 102 can be a multi-aperture antenna terminal. Broker 109 for hub 107 can mitigate terminal 102 as a multi-aperture terminal by redirecting one or more apertures to create a link through another satellite besides Rx-satellite 104-1 or Tx-satellite 104-2 or by de-weighting the antenna. In the examples of **FIGS. 1-4M,** agile hub system 100 using broker 109 for hub 107 can provide a number of capabilities. Examples of capabilities and features include real-time price-based routing for "least cost routing" across satellite provider networks; dynamic link arbitration based on predicted and measured link quality across multiple satellites to maximize link integrity beyond the capabilities provided through current state-of-the-art adaptive link techniques; user satellite or hub preferences can exclude constellations or satellites deemed insecure to introduce security-based routing. In tandem with crosslinking disclosed herein, hubs deemed insecure due to geographic location or configuration can be excluded. Crosslinking techniques disclosed herein can allow inter-constellation satellite linking via a single aperture/single terminal, and precise emitter locations with beam steering capabilities of electronically steered antennas allow planning for adjacent satellite interference mitigation. Such planning provides greater availability of satellites in all orbits in the presence of dense satellite environments such as when the look angles align for LEO and GEO satellites, especially in equatorial regions.

## Agile Hub Data Processing or Computing System

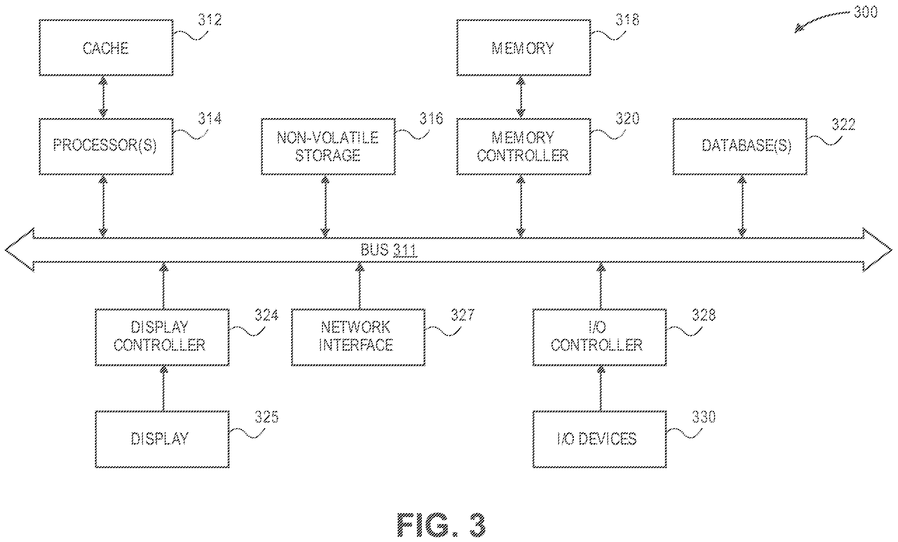

**FIG. 3** illustrates one example block diagram of a computing or computer system 300 for hub 107 (or an agile hub) of **FIG. 1-4M.** For example, computer system 300 can represent the various components used for hub 107 to implement broker 109 using techniques disclosed in **FIGS. 1-4M.** Although **FIG. 3** illustrates various components of a data processing or computing system, the components are not intended to represent any particular architecture or manner of interconnecting the components, as such details are not germane to the disclosed examples or embodiments. Network computers and other data processing systems or other electronic devices, which may have fewer components or perhaps more components, may also be used with the disclosed examples and embodiments.

Referring to **FIG. 3,** computing system 300, which is a form of a data processing or computer, includes a bus 311, which is coupled to processor(s) 314 coupled to cache 312, display controller 324 coupled to a display 325, network interface 327, non-volatile storage 316, memory controller 320 coupled to memory devices 318, I/O controller 328 coupled to I/O devices 330, and database(s) 322. Databases 322 can include information from ephemeris sources 306 or include ephemeris sources 306 and provide mathematical models to describe the orbit and location of satellites, e.g., RX and TX satellites (104-1, 104-2). Processor(s) 314 can include one or more central processing units (CPUs), graphics processing units (GPUs), a specialized processor or any combination thereof. Processor(s) 314 can retrieve instructions from any of the memories including non-volatile storage 316, memory devices 318, or database(s) 322, and execute the instructions to perform operations described in the disclosed examples and embodiments including broker 109.

Examples of I/O devices 330 can include mice, keyboards, printers and other like devices controlled by I/O controller 328. Network interface 327 can include modems, wired and wireless transceivers and communicate using any type of networking protocol including wired or wireless WAN and LAN protocols including LTE and Bluetooth® standards or any type of radio frequency (RF) and satellite communication protocols. In one example, network interface 327 can represent interface 108 of hub 107 in **FIG. 1.** Memory devices 318 can be any type of memory including random access memory (RAM), dynamic random-access memory (DRAM), which requires power continually in order to refresh or maintain the data in the memory. Non-volatile storage 316 can be a mass storage device including a magnetic hard drive or a magnetic optical drive or an optical drive or a digital video disc (DVD) RAM or a flash memory or other types of memory systems, which maintain data (e.g. large amounts of data) even after power is removed from the system.

For one example, memory devices 318 or database(s) 322 can store satellite orbit and location information including models and data for satellite constellations within any number of geographic locations, e.g., geographic location 103. For other examples, memory devices 318 or database(s) 322 can store, e.g., ephemeris source 306 information related to orbiting satellites. Although memory devices 318 and database(s) 322 are shown coupled to system bus 311, processor(s) 314 can be coupled to any number of external memory devices or databases locally or remotely by way of network interface 327, e.g., database(s) 322 can be secured storage in a cloud environment. For one example, processor(s) 314 can implement broker 109 according to the techniques and operations described herein.

In one example, processors (s) 314, I/O controller 328 and I/O devices 330, network interface 327 and other components can implement networking layers for satellite channel communication such as data link control (DLC) layers, media access control (MAC) layers, and other networking layers. Such components can implement any number of satellite communication protocols which assign satellite channels based on time and frequency such as time division multiple access (TDMA) protocols.

Examples and embodiments disclosed herein can be embodied in a data processing system architecture, data processing system or computing system, or a computer-readable medium or computer program product. Aspects, features, and details of the disclosed examples and embodiments can take the hardware or software or a combination of both, which can be referred to as a system or engine. The disclosed examples and embodiments can also be embodied in the form of a computer program product including one or more computer readable mediums having computer readable code which can be executed by one or more processors (e.g., processor(s) 314) to implement the techniques and operations disclosed herein and in **FIGS. 1-4M.**

### Exemplary Agile Hub System Operations

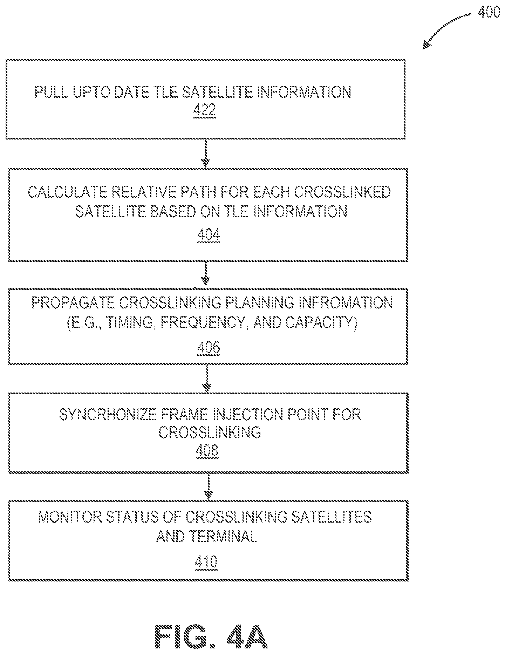

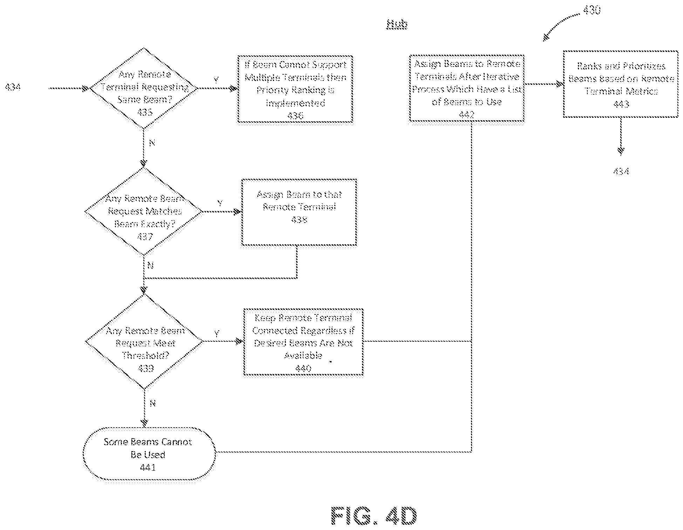

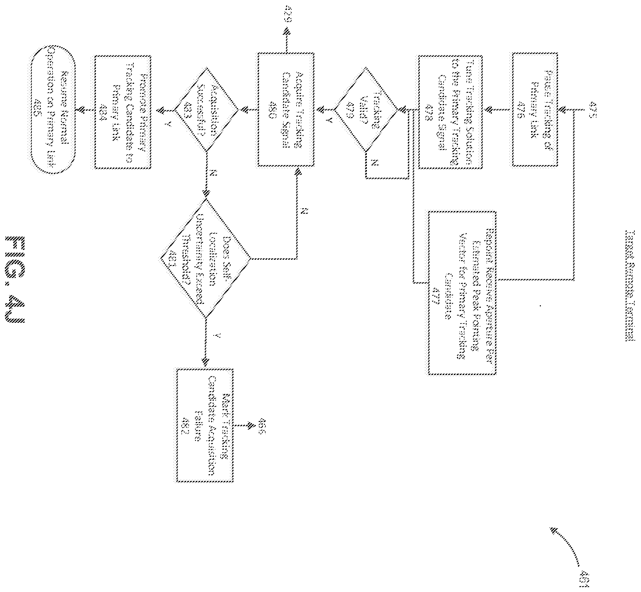

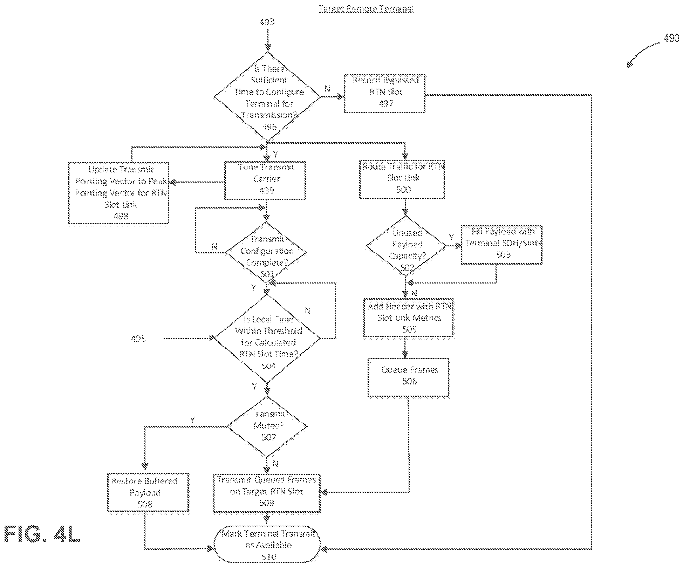

**FIG. 4A** illustrates one example flow diagram of an operation 400 for the agile hub 107 of **FIGS. 1-3.** Operation 400 includes operations 402 through 410.

At operation 402, up to date ephemeris information (e.g., ephemeris source 106) is pulled. For example, broker 109 can pull precise and up to date satellite orbit and location data from ephemeris source 106 to determine path and location for satellites in geographic location 103 including satellite 104-1 and satellite 104-2.

At operation 404, relative paths are calculated for each crosslinked satellite (e.g., Tx-satellite (A) 104-2 and Rx-satellite (B) 104-1) to one or more terminals. For example, broker 109 can calculate the paths on how satellite A and satellite B are moving in geographic location 103 relative terminal 102.

At operation 406, crosslinking planning information is propagated such as timing, frequency, and capacity planning information. For example, broker 109 for hub 107 can propagate planning information to terminal 102 and one or more satellites for crosslinking, e.g., Tx-satellite (A) and Rx-satellite (B). For example, broker 109 for hub 107 can evaluate and identify associated capacity and timing of RF links for terminal 102 to, e.g., Tx-satellite (A) and Rx-satellite (B). Broker 109 can determine planning information for crosslinking based on factors, bidding, and scheduling described herein, e.g., to identify less congested frequencies and time slots or frequencies and time slots with less interference. In one example, broker 109 can send the planning information to terminal 102, Tx-satellite (A), and Rx-satellite (B) for establishing a crosslink for terminal 102 to send RF signals to the Tx-satellite and receive RF signals from Rx-satellite on designated channels and frequencies at desired time slots for satellite communications.

At operation 408, a frame injection point is synchronized to trigger timing for the crosslinking with a Tx-satellite and a Rx-satellite. For example, broker 109 can identify a timeslot assignment in the RF links to trigger crosslinking for the Tx-satellite and Rx-satellite with terminal 102 as described regarding **FIGS. 1-2B.**

At operation 410, status of the crosslinking satellites and terminal are monitored. For example, broker 109 can receive and evaluate status information from terminal 102 and Tx-satellite (A) 104-2 and Rx-satellite (B) 104-1. In one example, monitored status information can include signal quality for RF links, e.g., carrier-to-noise (CNR) ratio, detected packet errors or dropped frames, etc. Monitored status information can also include satellite updates from ephemeris source 106. Broker 109 can use the monitored status information to adjust tracking or pointing of antenna 101 for terminal 102 to the Tx-satellite and Rx-satellite based on the monitored status information as described in **FIGS. 2A-2B.**

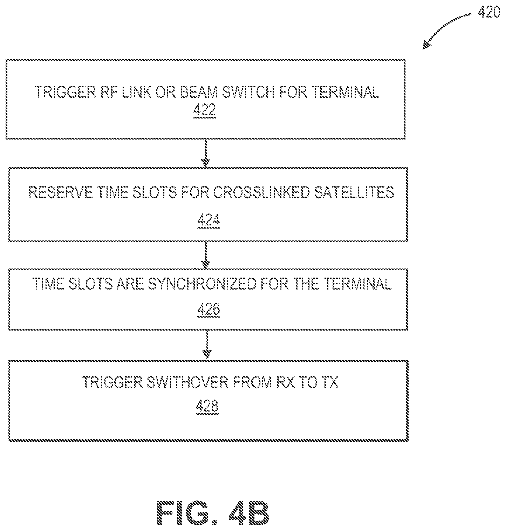

**FIG. 4B** illustrates one example flow diagram of an Rx make before Tx break operation 420 for the hub 107 of **FIGS. 1-3.** Operation 420 includes operations 422 through 428. In one example, operation 420 can be implemented the agile hub system 100 to change satellites for a crosslink connection if an RF link with one of the satellites is no longer capable of providing adequate or desired satellite communication for terminal 102.

At operation 422, a hub (e.g., hub 107) can monitor satellite information and RF link performance to the Tx-satellite and the Rx-satellite and can determine an RF link switch (or beam switch) is necessary and triggers a beam switch for terminal 102.

At operation 424, time slots for the crosslinked satellites are reserved. For example, hub 107 can reserve time slots for RF links of terminal 102 for an Rx-satellite to be a Tx-satellite and vice versa for the other satellite a change is required.

At operation 426, time slots are synchronized for terminal 102, which can be implemented by hub 107.

At operation 428, a switchover from a Rx-satellite to a Tx-satellite is triggered by hub 107. In one example, messaging for such a switch over can be implemented as described in **FIG. 2B.** In one example, a switchover can also occur for a Tx-satellite to a Rx-satellite.

**(Hub Beam Priority Selection)**

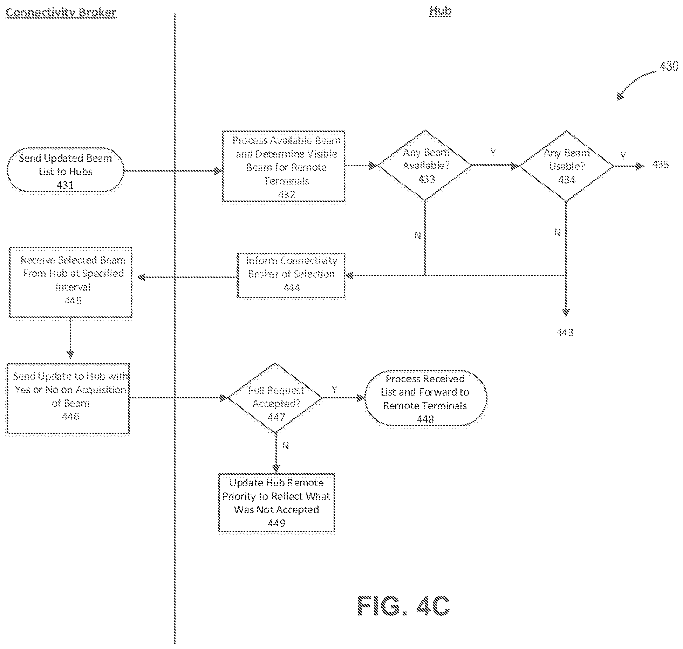

**FIGS. 4C-4D** illustrate one example of a flow diagram of a hub beam priority selection operation 430. This operation allows a hub (e.g., hub 107) to rank a priority list of available RF link capacity which is sent to a connectivity broker. In one example, after the hub receives the list from connectivity broker, the hub sends the list to remote terminals (e.g., terminal 102). In one example, the connectivity broker can determine what to send to which hubs based on which geographic regions the hubs are located and the hub can be responsible for picking an RF link from the list. Operation 430 includes operations 431 through 449 for a connectivity broker and a hub (e.g., hub 107).

At operation 431, a connectivity broker sends updated beam lists to one or more hubs (e.g., hub 107). The connectivity broker can be a broker for a connectivity or capacity market disclosed herein.

At operation 432, the hub processes an available beam from the updated beam list and can determine a visible beam for remote terminals (e.g., terminal 102). The hub can determine visibility of the beam by look angle calculated using the geolocation of the terminal (e.g., terminal 102) and satellite ephemeris.

At operation 433, the hub determines if a beam is available.

At operation 444, if the beam is not available, the hub informs the connectivity broker of a beam selection.

At operation 434, if a beam is available, the hub then makes a determination if any beam is usable for a remote terminal (e.g., terminal 102). In one example, the hub can determine if a beam is usable based on, e.g., jitter, latency, carrier to noise C/N ratio, availability, and bandwidth. If the visible beam is not usable, the operation continues to operations 443 and 444.

At operation 435, if the visible beam is usable, the hub makes a determination if another remote terminal is requesting the same beam.

At operation 436, if another remote terminal is requesting the same beam, the hub determines if the beam cannot support multiple terminals if not a priority ranking is implemented for the beam, e.g., ranking can be user defined such as first come first served. The hub can also assign beam capacity to the remote terminal with the request.

At operation 437, after operation 436 or if no remote terminal is requesting the same beam, the hub makes a determination if any remote terminal beam request matches the beam exactly.

At operation 438, if there is an exact match at operation 439, the hub assigns the beam to the remote terminal. In one example, the remote terminal should have first priority for the beam that meets its criteria for the request. Operation 440 can then proceed to operation 442.

At operation 439, if there is not an exact match at operation 439, the hub makes a determination if any beam request meets a threshold.

At operation 440, if threshold met, the hub can determine if a threshold is met by user defined minimum criteria and keeps the remote terminal connected regardless if desired beams are not available and proceeds to operation 442.

At operation 441, if threshold is not met, the hub makes a determination that some visible beams cannot be used and proceeds to operation 442.

At operation 442, at this point after an iterative process, the hub can assign beams to remote terminals (e.g., remote terminal 102) in which the terminals have a list of beams it can use. This process can occur for each terminal serviced by the hub (e.g., hub 107).

At operation 443, the hub can rank the beams for the terminals based on required remote terminal metrics, e.g., jitter, latency, carrier to noise C/N ratio and then proceeds to operation 444.

At operation 445, the connectivity broker receives the selected beam from the hub at a specified interval for one or more terminals.

At operation 446, the connectivity broker sends updated lists to the hubs for a geographic region (e.g., geographic region 103) with yes or no acquisition of the beam.

At operation 447, the hub makes a determination if the full request is accepted.

At operation 448, if the request is accepted, the hub processes the received list for the remote terminals.

At operation 449, if the request is not accepted, the hub updates the remote terminals beam priority to reflect which beams were not accepted.

In the above example operation 430, beam prioritization can include beam-shaping zones into multi-layered blockage zones. Each layer can be applied at the antenna reference frame. In one example, for a local remote terminal (e.g., terminal 102) a set of no-transmit zones for RF safety purposes can be implemented. The local remote terminal can cease transmission when its primary pointing vector is inside this zone.

In another example, a local set of blockage zones can be implemented for identifying blockages that are fixed relative to the installation. A local terminal may attempt to operate when its primary pointing vector is within this zone; any interruption of service while operating in this zone is immediately identified as a blockage and the terminal will begin searching for a new link.

In another example, beam prioritization techniques can be implemented with weighted signal preservation contours based on known in-band interferers. Examples of in-band interferers can include terrestrial microwave towers or non-target satellites operating on different orbits. For example, using a GEO satellite with an interfering LEO, a local terminal can map the orbital path of proximal LEOs with live in-band carriers and invoke beam-shaping techniques to minimize adjacent satellite interference. One such beam-shaping technique can be a sidelobe suppression process that can reduce gain on a target sidelobe while preserving gain along the main beam. This can be applied either on the transmit beam, receive beam, or both.

In another example, beam prioritization can be implemented with a weighted environmental contour based on measured link performance at a given geolocation and platform. For example, the hub can have access to all remote terminals operating on the network and can build environmental profiles over time. Environmental considerations can include long time-scale blockages such as buildings or mountains, medium time-scale interferers such as foliage (seasonal) or construction, or short time-scale impacts such as weather. Such environmental maps can be accumulated over time at the hub based on monitoring operational remote terminals.

**(Remote Beam Priority Selection)**

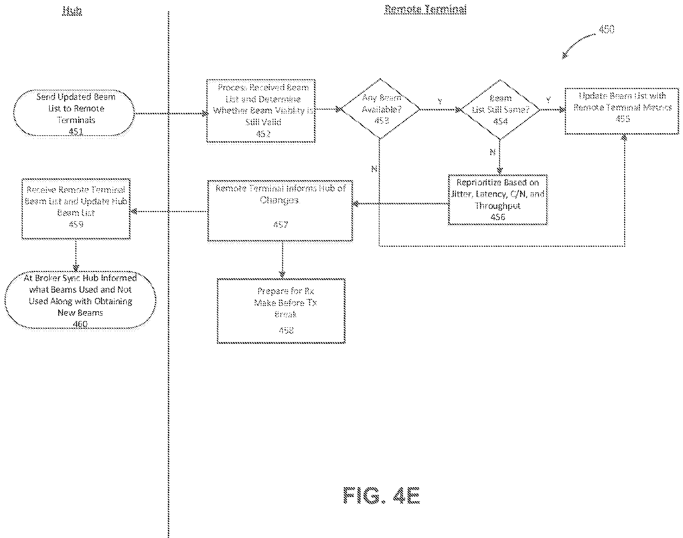

**FIG. 4E** illustrates one example of a flow diagram of a remote beam priority selection operation 450. Operation 450 includes operations 451 through 460.

At operation 451, the hub (e.g., 107) sends updated beam lists to remote terminals (e.g., terminal 102).

At operation 452, a remote terminal processes the updated beam lists from the hub and determines whether beam viability is still valid. For example, a remote terminal can be on a vehicle or aircraft which is moving fast. The remote terminal can determine viability of the beam by look angle using the terminal geolocation and satellite location/ephemeris.

At operation 453, the remote terminal makes a determination if any beam is available. If a beam is not available, operation 453 proceeds to operation 455.

At operation 454, if a beam is available, the remote terminal makes a determination if the beam list is still the same. If yes, operation 454 proceeds to operation 455 and the remote terminal updates the beam list with remote terminal metrics, e.g., known blockages, current performance on beam versus what hub expects. If no, operation 454 proceeds to operation 456.

At operation 456, the remote terminal reprioritizes the beam list based on parameters such as jitter, latency, carrier-to-noise (C/N) ratio, and throughput and proceeds to operation 457.

At operation 457, the remote terminal informs the hub of the changes. If the remote terminal has no available channels, the remote terminal will listen until beam list is available and can proceed to operations 458 and 459.

At operation 458, the remote terminal can prepare for a "Rx-make"-before-"Tx-break" operation.

At operation 459, the hub receives updated beam lists from the remote terminal and updates its own beam list. In one example, if the remote terminal informs the hub that no beam is available, the hub can prioritize beams for the remote terminal based on next connectivity broker update.

At operation 460, during broker synchronization, the hub can be informed what beams have been used or not used along with new beam lists to use.

**(Spatial Multicarrier Operation Time Windows)**

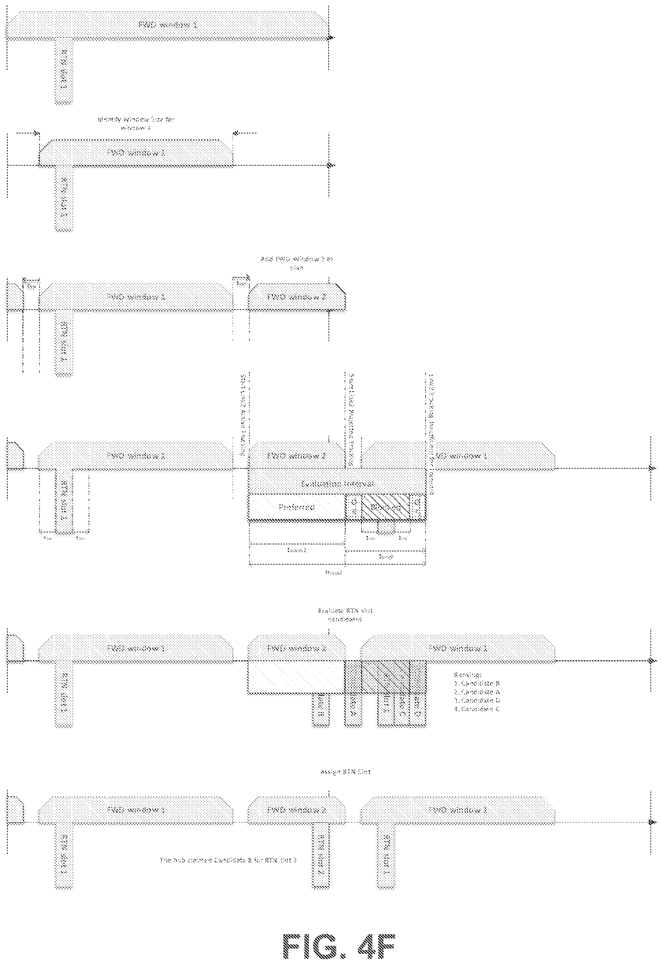

**FIGS. 4F-4H** illustrate examples of time windows for receiving packets or frames on an RF link or associated link during spatial multicarrier operations. Time windows are continuous blocks of time in which a remote terminal (e.g., terminal 102) is to receive packets or frames on associated or designated RF link. A single RF link can be associated with more than one time window. In these examples, a time window does not require a paired terminal-to-hub return (RTN) slot. A RTN slot can be required to pair with a time window unless both the associated RF link platform and the terminal platform are both stationary. RTN Slots may optionally be defined to have a set pattern, such as only on even transmission cycles. In one example, for a network management system, the agile hub system (e.g., system 100) can route traffic to appropriate RF links per the terminal policy (e.g., terminal 102 policy).

**FIG. 4F** illustrates an example time window for a hub (e.g., hub 107) planning to add a time window. Regarding hub-to-terminal forward (FWD) window 1, a switching time, tsw, can be used to transition from one carrier to another. In one example, when switching from one satellite to another satellite for a terminal (e.g., terminal 102), this includes time to repoint the apertures and retune the hub-modem and any tracking receivers. In one example, the terminal should be in an active and stable tracking state at the end of the tsw interval. Switching times can be terminal dependent and different for the FWD and RTN links. In one example, the hub can evaluate viable RTN intervals for an RTN slot 2. In one example, start link 2 active tracking can occur during FWD window 2. The estimated projected tracking during for link 2 may vary between platforms, constellations, or the terminal regulatory environments. In one example, for an evaluation interval, it begins when link 2 tracking becomes active. The evaluation interval can end where there is insufficient confidence in link 2 projected tracking solution. In one example, RTN slots outside of this interval are not considered. Within this interval, three primary intervals can be identified:

- A RTN interval is blocked if it would impact an existing RTN slot;

- Else, a RTN interval "Preferred" if the terminal is actively tracking the source.
- Otherwise, a RTN interval is operating in a projected tracking mode and is deemed to be "OK."

In one example, RTN slot candidates can be evaluated and ranked, e.g., candidates B, A, D, and C. For example, candidates in the OK RTN interval (Candidates A and D) are ranked lower than those in the Preferred RTN interval. Additionally, candidate D's pointing solution can be based on data which can be more stale and old than candidate A. In such a case, candidate D can be ranked lower than candidate A.

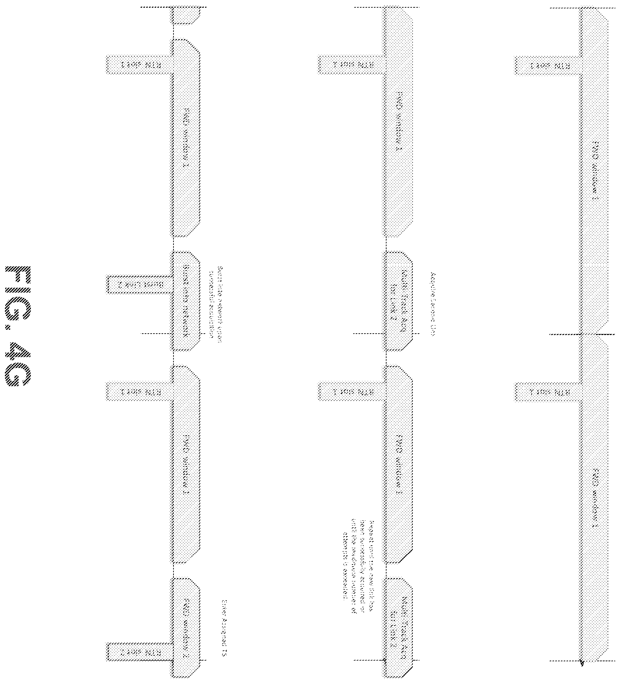

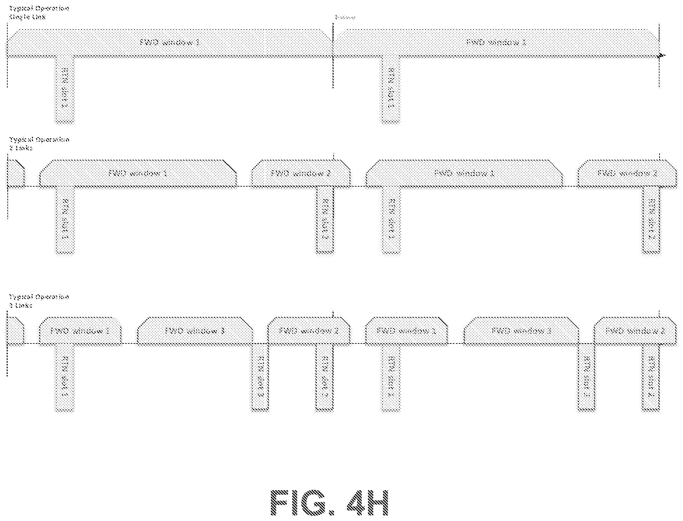

FIG. 4G illustrates an example time window for a terminal (e.g., terminal 102) to add a time window. During this process, the terminal has a time window for acquiring a second link - multi-track acquisition for link 2. The terminal can repeat the acquisition process until a new link has been successfully acquired or until the maximum number of attempts has been exceeded. FIG. 4H illustrates another example time window during a spatial multicarrier operation. In this example, typical time windows 1-3 and RTN slots 1-3 are shown for single links, 2 links, and three links.

**(Spatial Multicarrier Operation FWD Transition with Multiple Links)**

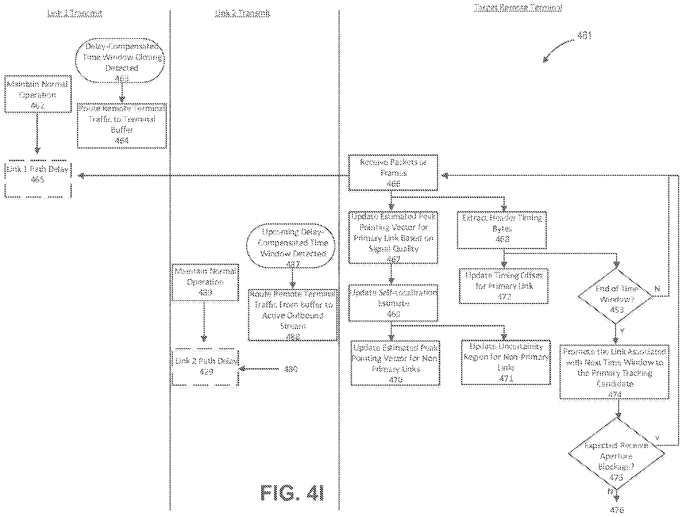

FIGS. 4I-4J illustrates one example of a flow diagram of a spatial multicarrier FWD operation 461 with multiple links (e.g., links 1 and 2) for a target remote terminal (e.g., terminal 102). Operation 461 includes operations 462 through 489.

At operation 462, a source for transmitting (FWD) on link 2 maintains normal operation and establishes a link with target remote terminal. At operation 465, a link 1 path delay can occur. At the source for link 1 transmit, at operation 463, a delay-compensated time window closing can be detected. At operation 464, the source for link 1 transmit can route traffic to the target remote terminal to a terminal buffer for transmission at a later time.

At operation 466, once link 1 transmit is established, the target remote terminal can receive packets or frames. After operation 466, operation 461 can proceed to operations 467 and 468.

At operation 467, the target remote terminal updates estimated peak pointing vector for primary link based on signal quality.

At operation 469, the target remote terminal updates self-localization estimates and proceeds to operations 470 and 471. At operation 470, the target remote terminal updates estimated peak pointing vector for non-primary links. At operation 471, the target remote terminal updates uncertainty region for non-primary links.

At operation 468, the target remote terminal extracts header and timing bytes from the received packets or frames and proceeds to operations 472 and 473. At operation 472, the target remote terminal updates timing offset for primary link.

At operation 473, the target remote terminal determines if at the end of time window. If no, operation 473 returns to operation 466. If yes, at operation 474, the target remote terminal promotes the link associated with the next time window to the primary tracking candidate.

At operation 475, the target remote terminal makes a determination if there is expected receive aperture blockage. If yes, operation 475 returns to operation 466. If no, operation 475 proceeds to operations 476 and 477.

At operation 476, the target remote terminal pauses tracking of the primary link. At operation 477, the target remote terminal repoints receive aperture per estimated peak pointing vector for primary tracking candidate.

At operation 478, the target remote terminal tunes tracking solution to the primary tracking candidate signal.

At operation 479, the target remote terminal makes a determination if tracking is valid. If no, operation 479 continues until tracking is determined to be valid. If yes, operation 479 continues to operation 480.

At operation 480, the target remote terminal acquires the tracking candidate signal. At this juncture, the source for link 2 transmit can have a delay at operation 429. At operation 489, the source for link 2 transmit can maintain typical operation. At operations 487 and 488, the source for link 2 transmit can detect the upcoming delay compensated time window and route target remote terminal traffic from terminal buffer to active outbound traffic to the target remote terminal. Operation 480 can proceed to operations 429 and 483.

At operation 483, the target remote terminal makes a determination if the acquisition is successful. If no, operation 483 proceeds to operation 481. If yes, at operations 484 and 485, the target remote terminal promotes primary tracking candidate to primary link and resumes typical operation on primary link.

At operation 481, the target remote terminal can make a determination if the self-localization uncertainty exceeds a threshold. If yes, at operation 482, the target remote terminal marks tracking candidate acquisition failure and proceeds to operation 466. If no, operation 481 proceeds to operation 480.

**(Spatial Multicarrier Operation RTN Transition with Multiple Links)**

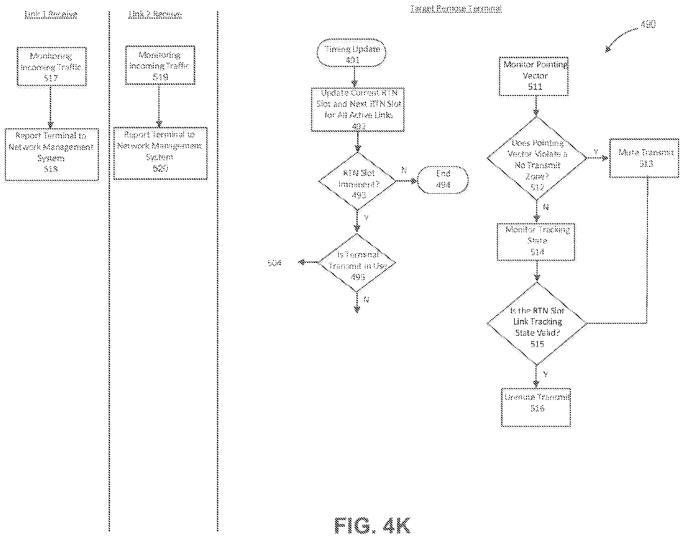

FIGS. 4K-4L illustrates one example of a flow diagram of a spatial multicarrier RTN operation 490 with multiple links for a target remote terminal (e.g., terminal 102). Operation 490 includes operations 491 through 520.

At operations 517 and 518, for the source of link 1 receive, the source can monitor incoming traffic and report terminal status to the network management system including appropriate hubs or connectivity broker for the hub system (e.g., system 100).

At operation 519 and 520, for the source of link 2 receive, the source can monitor incoming traffic and report terminal status to the network management system (e.g., system 100).

At operation 491, the target remote terminal processes a time update.

At operation 492, the target remote terminal updates current RTN slot and next RTN slot for all active links.

At operation 493, the target remote terminal makes a determination if RTN slot is imminent. If no, at operation 494, the operation ends. If yes, at operation 495, the target remote terminal makes a determination if the terminal transit is in use. If yes, operation 495 proceeds to operation 496. If no, at operation 495, proceeds to operation 504.

At operation 496, the target remote terminal makes a determination if there is sufficient time to configure the terminal for transmission. If no, at operation 497, the target remote terminal records bypassed RTN slot and proceeds to operation 510. If yes, operation 496 proceeds to operations 499 and 500.

At operation 499, the target remote terminal tunes the transmit carrier and proceeds to operations 498 and 501. At operation 498, the target remote terminal updates transmit pointing vector to the peak pointing vector for RTN slot link and proceeds to operation 499.

At operation 500, the target remote terminal routes traffic for the RTN slot link. At operation 502, the target remote terminal makes a determination if there is unused payload capacity. If yes, at operation 503, the target remote terminal fills payload with terminal SOH/stats and proceeds to operation 505. If no, at operation 505, the target remote terminal adds header with RTN slot link metrics.

At operation 506, the target remote terminal queues packets or frames and proceeds to operation 509.

At operation 501, the target remote terminal makes a determination if the transmit configuration is complete. If no, the operation 501 repeats. If yes, at operation 504, the target remote terminal makes a determination if the local time is within a threshold for the calculated RTN slot time. If no, operation 504 repeats. If yes, at operation 507, the target remote terminal makes a determination if the transmit is muted. If no, at operation 509, the target remote terminal transmits queued packets or frames on target RTN slot. If yes, the target remote terminal restores buffered payload. At operation 510, the target remote terminal marks terminal transmit as available.

At operation 511, the target remote terminal monitors a pointing vector.

At operation 512, the target remote terminal makes a determination if the pointing vector violates a to transmit zone. If yes, at operation 513, target remote terminal mutes the transmit. If yes, at operation 514, the target remote terminal monitors the tracking state and can determine if it is invalid if the link's tracking uncertainty exceeds a threshold and if it is invalid if the time since last active track exceeds a threshold.

At operation 515, the target remote terminal makes a determination if the RTN slot link tracking state is valid. If no, operation 515 proceeds to operation 513. If yes, at operation 516, the target remote terminal unmutes transmit.

**(Simplex Crosslink)**

In one example, for the hub system, e.g., system 100, the hub (e.g., hub 107) can command a terminal (e.g., terminal 102) to act as a relay or a repeater by identifying a link schedule with a simplex source and a target destination identified. In one example, if either the terminal or the target destination are on non-stationary platforms, then the target destination should have a nonzero window duration to provide the terminal a time window to be used for tracking the target destination. In one example, with the target destination defined as a higher latency link such as a so called "bent-pipe" GEO, the terminal could track the target through the retransmission of the broadcast signal. In other examples, hub can identify a reference signal on the target destination that can be used to maintain pointing errors within the threshold values. In one example, during such target destination tracking time window, the terminal can transmit a heartbeat message with link statistics, timing updates, and terminal health status.

**(Half-Duplex Crosslink)**

In another example, for the hub system (e.g., system 100) the simplex crosslink can be expanded by alternating the simplex communication at the end of each transmission. In this example, the maximum time window duration can be limited by the projected tracking validity and terminal switching time.

**(Rx Make Before Tx Break)**

In one example, for the hub system, the "Rx Make"-before-"Tx Break" can allow the hub/network to take advantage of terminals with independent receive and transmit aperture controls.

In one example, the hub (e.g., hub 107) can constrain outbound traffic for a given remote terminal to specific time intervals within its transmission period. In this process, constraining traffic of a remote terminal to these intervals can be referred to as a time window described in **FIGS. 4E-4G**. The techniques and operations described herein allows a terminal with sufficient switching speed to transition to the next link without a perceptible interruption of communication.

In one example, the terminal (e.g., terminal 102) can be fully tuned to the source (Rx or Tx satellite) during the time window to maximize the link integrity while using unclaimed interval to acquire another satellite source. In one example, the transmit of the terminal need not be impacted provided with a transmission interval called the RTN slot as described herein occurs while the remote terminal is considered to be tracking the active link.

In one example, if the RTN Slot lies outside of the time window, a remote terminal can derive the transmit target's pointing vector based on extrapolated data. That is, the projected tracking state would not be considered valid for transmit either (a) if the pointing vector uncertainty exceeds the threshold set, or (b) if the terminal exceeds the allowable time in since the last Active Tracking state on the transmit target in which regulatory bodies can be a source for such time restrictions.

For the examples described herein for the "Rx Make"-before-"Tx Break," the operation can be implemented using the spatial multicarrier operations disclosed herein. In one example, simultaneous tracking of multiple links, each with its own tracking state machine, can enable a terminal with a sufficiently fast switching speed to maintain spatially diverse links without degrading the integrity of the active links. For example, this spatial diversity increases a terminal's perceived availability and provides routing options for a network management system NMS. In one example, an NMS can prefer to route latency-sensitive applications via a LEO instead of a GEO; the end-to-end latency of a LEO link is expected to be substantially lower than that of a GEO link.

**(State Machine for Tracking States)**

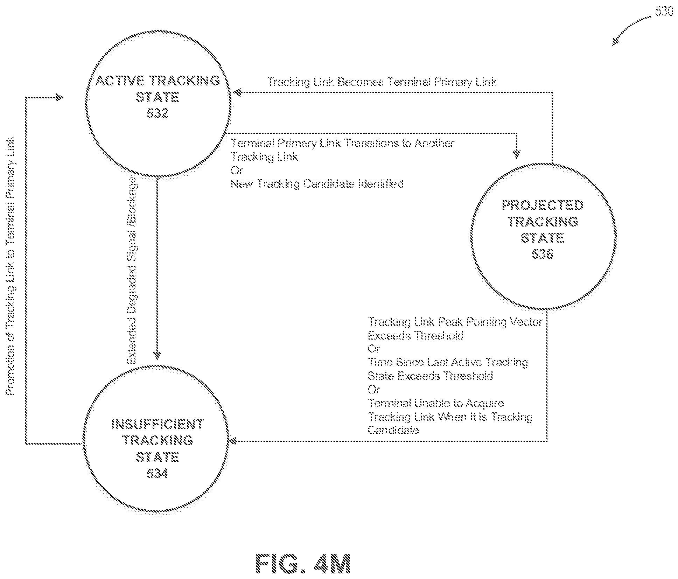

**FIG. 4M** illustrates one example of a state machine 530 for tracking states 532, 534 and 536. State machine 530 can be implemented by a remote target terminal (e.g., terminal 102) or by components in the hub system 100. State 532 refers to the active tracking state. In this state, peak point vector can be updated based on signal quality readings and self-localization solution can be updated based on tracking link's point vector. If there is extended degraded signal blockage, state 532 changes to state 534, which refers to the insufficient tracking state. If the tracking link become the primary link for the terminal, state 532 moves to state 536 which refers to the projected tracking state. At state 536, peak pointing vector can be updated based on the terminal self-localization solution. If the tracking in's peaking point vector uncertainty exceeds a threshold, or the time since last active tracking state for this tracking link exceeds a threshold, or the terminal is und able to acquire the tracking link when it is tracking the candidate, state 536 changes to state 534, which refers to the insufficient tracking state. At state 534, peak pointing vector can be updated based on the terminal self-localization solution and inhibit/mute transmit on this tracking link can be implemented. At state 534, if promotion of this tracking link to the primary link, this state changes to state 532.

**Exemplary Flat Panel Antennas**

The flat panel antennas as described in **FIGS. 5A-23B** can be used for satellite communications according to the methods and systems using an agile hub and smart connectivity broker (e.g., broker 109 for hub 107) disclosed in **FIGS. 1-4.** In one example, flat panel antennas disclosed are part of a metamaterial antenna system and can be used for antenna 101 of terminal 102 described in **FIG. 1.** Examples of a metamaterial antenna system for communications satellite earth stations are described. In one example, the antenna system is a component or subsystem of a satellite earth station (ES) operating on a mobile platform (e.g., aeronautical, maritime, land, etc.) that operates using frequencies for civil commercial satellite communications. In some examples, the antenna system also can be used in earth stations that are not on mobile platforms (e.g., fixed or transportable earth stations).

In one example, the antenna system uses surface scattering metamaterial technology to form and steer transmit and receive beams through separate antennas. In one example, the antenna systems are analog systems, in contrast to antenna systems that employ digital signal processing to electrically form and steer beams (such as phased array antennas).

In one example, the antenna system is comprised of three functional subsystems: (1) a wave guiding structure consisting of a cylindrical wave feed architecture; (2) an array of wave scattering metamaterial unit cells that are part of antenna elements; and (3) a control structure to command formation of an adjustable radiation field (beam) from the metamaterial scattering elements using holographic principles.

**Example Wave Guide Structures for Flat Panel Antennas**

**FIG. 5A** illustrates a top view of one example of a coaxial feed that is used to provide a cylindrical wave feed. Referring to **FIG. 5A,** the coaxial feed includes a center conductor and an outer conductor. In one example, the cylindrical wave feed architecture feeds the antenna from a central point with an excitation that spreads outward in a cylindrical manner from the feed point. That is, a cylindrically fed antenna creates an outward travelling concentric feed wave. In one example, the shape of the cylindrical feed antenna around the cylindrical feed can be circular, square or any shape. In another example, a cylindrically fed antenna creates an inward travelling feed wave. In such a case, the feed wave most naturally comes from a circular structure. **FIG. 5B** illustrates an aperture having one or more arrays of antenna elements placed in concentric rings around an input feed of the cylindrically fed antenna.

## Antenna Elements

In one example, the antenna elements comprise a group of patch and slot antennas (unit cells). This group of unit cells comprises an array of scattering metamaterial elements. In one example, each scattering element in the antenna system is part of a unit cell that consists of a lower conductor, a dielectric substrate and an upper conductor that embeds a complementary electric inductive-capacitive resonator ("complementary electric LC" or "CELC") that is etched in or deposited onto the upper conductor. LC in the context of CELC refers to inductance-capacitance, as opposed to liquid crystal.

In one example, a liquid crystal (LC) is disposed in the gap around the scattering element. Liquid crystal is encapsulated in each unit cell and separates the lower conductor associated with a slot from an upper conductor associated with its patch. Liquid crystal has a permittivity that is a function of the orientation of the molecules comprising the liquid crystal, and the orientation of the molecules (and thus the permittivity) can be controlled by adjusting the bias voltage across the liquid crystal. Using this property, in one example, the liquid crystal integrates an on/off switch and intermediate states between on and off for the transmission of energy from the guided wave to the CELC. When switched on, the CELC emits an electromagnetic wave like an electrically small dipole antenna. The teachings and techniques described herein are not limited to having a liquid crystal that operates in a binary fashion with respect to energy transmission.

In one example, the feed geometry of this antenna system allows the antenna elements to be positioned at forty-five degree (45°) angles to the vector of the wave in the wave feed. Note that other positions may be used (e.g., at 40° angles). This position of the elements enables control of the free space wave received by or transmitted/radiated from the elements. In one example, the antenna elements are arranged with an inter-element spacing that is less than a free-space wavelength of the operating frequency of the antenna. For example, if there are four scattering elements per wavelength, the elements in the 30 GHz transmit antenna will be approximately 2.5 mm (i.e., 1/4th the 10mm free-space wavelength of 30 GHz).

In one example, the two sets of elements are perpendicular to each other and simultaneously have equal amplitude excitation if controlled to the same tuning state. Rotating them +/-45 degrees relative to the feed wave excitation achieves both desired features at once. Rotating one set 0 degrees and the other 90 degrees would achieve the perpendicular goal, but not the equal amplitude excitation goal. Note that 0 and 90 degrees may be used to achieve isolation when feeding the array of antenna elements in a single structure from two sides as described above.

The amount of radiated power from each unit cell is controlled by applying a voltage to the patch (potential across the LC channel) using a controller. Traces to each patch are used to provide the voltage to the patch antenna. The voltage is used to tune or detune the capacitance and thus the resonance frequency of individual elements to effectuate beam forming. The voltage required is dependent on the liquid crystal mixture being used. The voltage tuning characteristic of liquid crystal mixtures is mainly described by a threshold voltage at which the liquid crystal starts to be affected by the voltage and the saturation voltage, above which an increase of the voltage does not cause major tuning in liquid crystal. These two characteristic parameters can change for different liquid crystal mixtures.

In one example, a matrix drive is used to apply voltage to the patches in order to drive each cell separately from all the other cells without having a separate connection for each cell (direct drive). Because of the high density of elements, the matrix drive is the most efficient way to address each cell individually.

In one example, the control structure for the antenna system has 2 main components: the controller, which includes drive electronics for the antenna system, is below the wave scattering structure, while the matrix drive switching array is interspersed throughout the radiating RF array in such a way as to not interfere with the radiation. In one example, the drive electronics for the antenna system comprise commercial off-the-shelf LCD controls used in commercial television appliances that adjust the bias voltage for each scattering element by adjusting the amplitude of an AC bias signal to that element.

In one example, the controller also contains a microprocessor executing software. The control structure may also incorporate sensors (e.g., a GPS receiver, a three-axis compass, a 3-axis accelerometer, 3-axis gyro, 3-axis magnetometer, etc.) to provide location and orientation information to the processor. The location and orientation information may be provided to the processor by other systems in the earth station and/or may not be part of the antenna system.

More specifically, the controller controls which elements are turned off and which elements are turned on and at which phase and amplitude level at the frequency of operation. The elements are selectively detuned for frequency operation by voltage application.

For transmission, a controller supplies an array of voltage signals to the RF patches to create a modulation, or control pattern. The control pattern causes the elements to be turned to different states. In one example, multistate control is used in which various elements are turned on and off to varying levels, further approximating a sinusoidal control pattern, as opposed to a square wave (i.e., a sinusoid gray shade modulation pattern). In one example, some elements radiate more strongly than others, rather than some elements radiate and some do not. Variable radiation is achieved by applying specific voltage levels, which adjusts the liquid crystal permittivity to varying amounts, thereby detuning elements variably and causing some elements to radiate more than others.

The generation of a focused beam by the metamaterial array of elements can be explained by the phenomenon of constructive and destructive interference. Individual electromagnetic waves sum up (constructive interference) if they have the same phase when they meet in free space and waves cancel each other (destructive interference) if they are in opposite phase when they meet in free space. If the slots in a slotted antenna are positioned so that each successive slot is positioned at a different distance from the excitation point of the guided wave, the scattered wave from that element will have a different phase than the scattered wave of the previous slot. If the slots are spaced one quarter of a guided wavelength apart, each slot will scatter a wave with a one fourth phase delay from the previous slot.

Using the array, the number of patterns of constructive and destructive interference that can be produced can be increased so that beams can be pointed theoretically in any direction plus or minus ninety degrees (90°) from the bore sight of the antenna array, using the principles of holography. Thus, by controlling which metamaterial unit cells are turned on or off (i.e., by changing the pattern of which cells are turned on and which cells are turned off), a different pattern of constructive and destructive interference can be produced, and the antenna can change the direction of the main beam. The time required to turn the unit cells on and off dictates the speed at which the beam can be switched from one location to another location.

In one example, the antenna system produces one steerable beam for the uplink antenna and one steerable beam for the downlink antenna. In one example, the antenna system uses metamaterial technology to receive beams and to decode signals from the satellite and to form transmit beams that are directed toward the satellite. In one example, the antenna systems are analog systems, in contrast to antenna systems that employ digital signal processing to electrically form and steer beams (such as phased array antennas). In one example, the antenna system is considered a "surface" antenna that is planar and relatively low profile, especially when compared to conventional satellite dish receivers.

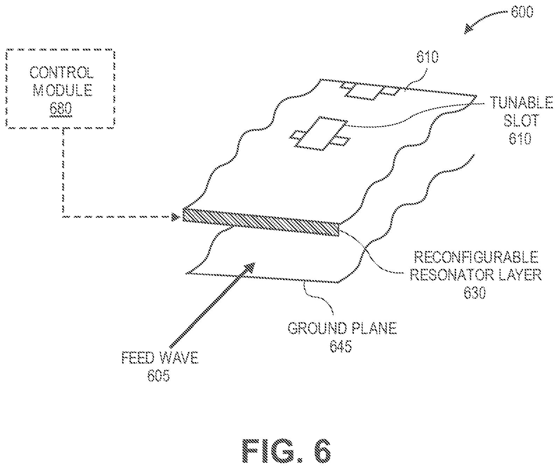

**FIG. 6** illustrates a perspective view 600 of one row of antenna elements that includes a ground plane 645 and a reconfigurable resonator layer 630. Reconfigurable resonator layer 630 includes an array of tunable slots 610. The array of tunable slots 610 can be configured to point the antenna in a desired direction. Each of the tunable slots can be tuned/adjusted by varying a voltage across the liquid crystal.

Control module 680 is coupled to reconfigurable resonator layer 630 to modulate the array of tunable slots 610 by varying the voltage across the liquid crystal in **FIG. 6.** Control module 680 may include a Field Programmable Gate Array ("FPGA"), a microprocessor, a controller, System-on-a-Chip (Sock), or other processing logic. In one example, control module 680 includes logic circuitry (e.g., multiplexer) to drive the array of tunable slots 610. In one example, control module 680 receives data that includes specifications for a holographic diffraction pattern to be driven onto the array of tunable slots 610. The holographic diffraction patterns may be generated in response to a spatial relationship between the antenna and a satellite so that the holographic diffraction pattern steers the downlink beams (and uplink beam if the antenna system performs transmit) in the appropriate direction for communication. Although not drawn in each figure, a control module similar to control module 680 may drive each array of tunable slots described in the figures of the disclosure.

Radio Frequency ("RF") holography is also possible using analogous techniques where a desired RF beam can be generated when an RF reference beam encounters an RF holographic diffraction pattern. In the case of satellite communications, the reference beam is in the form of a feed wave, such as feed wave 605 (approximately 20 GHz in some examples). To transform a feed wave into a radiated beam (either for transmitting or receiving purposes), an interference pattern is calculated between the desired RF beam (the object beam) and the feed wave (the reference beam). The interference pattern is driven onto the array of tunable slots 610 as a diffraction pattern so that the feed wave is "steered" into the desired RF beam (having the desired shape and direction). In other words, the feed wave encountering the holographic diffraction pattern "reconstructs" the object beam, which is formed according to design requirements of the communication system. The holographic diffraction pattern contains the excitation of each element and is calculated by $W_{hologram} = W_{in}^* W_{out}$, with $w_{in}$ as the wave equation in the waveguide and $w_{out}$ the wave equation on the outgoing wave.

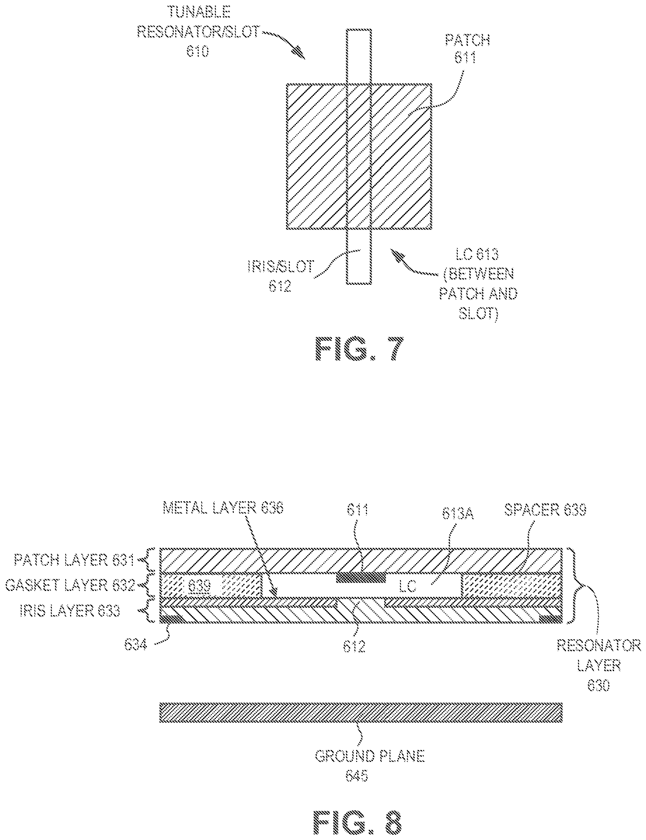

**FIG. 7** illustrates one example of a tunable resonator/slot 610. Tunable slot 610 includes an iris/slot 612, a radiating patch 611, and liquid crystal (LC) 613 disposed between iris 612 and patch 611. In one example, radiating patch 611 is co-located with iris 612.

**FIG. 8** illustrates a cross section view of a physical antenna aperture according to one example. The antenna aperture includes ground plane 645, and a metal layer 636 within iris layer 633, which is included in reconfigurable resonator layer 630. In one example, the antenna aperture of **FIG. 8** includes a plurality of tunable resonator/slots 610 of **FIG. 7.** Iris/slot 612 is defined by openings in metal layer 636. A feed wave, such as feed wave 605 of **FIG. 6,** may have a microwave frequency compatible with satellite communication channels. The feed wave propagates between ground plane 645 and resonator layer 630.

Reconfigurable resonator layer 630 also includes gasket layer 632 and patch layer 631. Gasket layer 632 is disposed between patch layer 631 and iris layer 633. In one example, a spacer could replace gasket layer 632. In one example, Iris layer 633 is a printed circuit board ("PCB") that includes a copper layer as metal layer 636. In one example, iris layer 633 is glass. Iris layer 633 may be other types of substrates.

Openings may be etched in the copper layer to form slots 612. In one example, iris layer 633 is conductively coupled by a conductive bonding layer to another structure (e.g., a waveguide) in FIG. 8. Note that in an example the iris layer is not conductively coupled by a conductive bonding layer and is instead interfaced with a non-conducting bonding layer.

Patch layer 631 may also be a PCB that includes metal as radiating patches 611. In one example, gasket layer 632 includes spacers 639 that provide a mechanical standoff to define the dimension between metal layer 636 and patch 611. In one example, the spacers are 75 microns, but other sizes may be used (e.g., 3-200 mm). As mentioned above, in one example, the antenna aperture of FIG. 8 includes multiple tunable resonator/slots, such as tunable resonator/slot 610 includes patch 611, liquid crystal 613, and iris 612 of FIG. 7. The chamber for liquid crystal 613 is defined by spacers 639, iris layer 633 and metal layer 636. When the chamber is filled with liquid crystal, patch layer 631 can be laminated onto spacers 639 to seal liquid crystal within resonator layer 630.

A voltage between patch layer 631 and iris layer 633 can be modulated to tune the liquid crystal in the gap between the patch and the slots (e.g., tunable resonator/slot 610). Adjusting the voltage across liquid crystal 613 varies the capacitance of a slot (e.g., tunable resonator/slot 610). Accordingly, the reactance of a slot (e.g., tunable resonator/slot 610) can be varied by changing the capacitance. Resonant frequency of slot 610 also changes according to the equation $f = \frac{1}{2\pi\sqrt{LC}}$ where $f$ is the resonant frequency of slot 610 and L and C are the inductance and capacitance of slot 610, respectively. The resonant frequency of slot 610 affects the energy radiated from feed wave 605 propagating through the waveguide. As an example, if feed wave 605 is 20 GHz, the resonant frequency of a slot 610 may be adjusted (by varying the capacitance) to 17 GHz so that the slot 610 couples substantially no energy from feed wave 605. Or, the resonant frequency of a slot 610 may be adjusted to 20 GHz so that the slot 610 couples energy from feed wave 605 and radiates that energy into free space. Although the examples given are binary (fully radiating or not radiating at all), full grey scale control of the reactance, and therefore the resonant frequency of slot 610 is possible with voltage variance over a multivalued range. Hence, the energy radiated from each slot 610 can be finely controlled so that detailed holographic diffraction patterns can be formed by the array of tunable slots.

In one example, tunable slots in a row are spaced from each other by λ/5. Other types of spacing may be used. In one example, each tunable slot in a row is spaced from the closest tunable slot in an adjacent row by λ/2, and, thus, commonly oriented tunable slots in different rows are spaced by λ/4, though other spacing are possible (e.g., λ/5, λ/6.3). In another example, each tunable slot in a row is spaced from the closest tunable slot in an adjacent row by λ/3.

Examples of the invention use reconfigurable metamaterial technology, such as described in U.S. Patent Application No. 14/550,178, entitled "Dynamic Polarization and Coupling Control from a Steerable Cylindrically Fed Holographic Antenna", filed November 21, 2014 and U.S. Patent Application No. 14/610,502, entitled "Ridged Waveguide Feed Structures for Reconfigurable Antenna", filed January 30, 2015, to the multi-aperture needs of the marketplace.

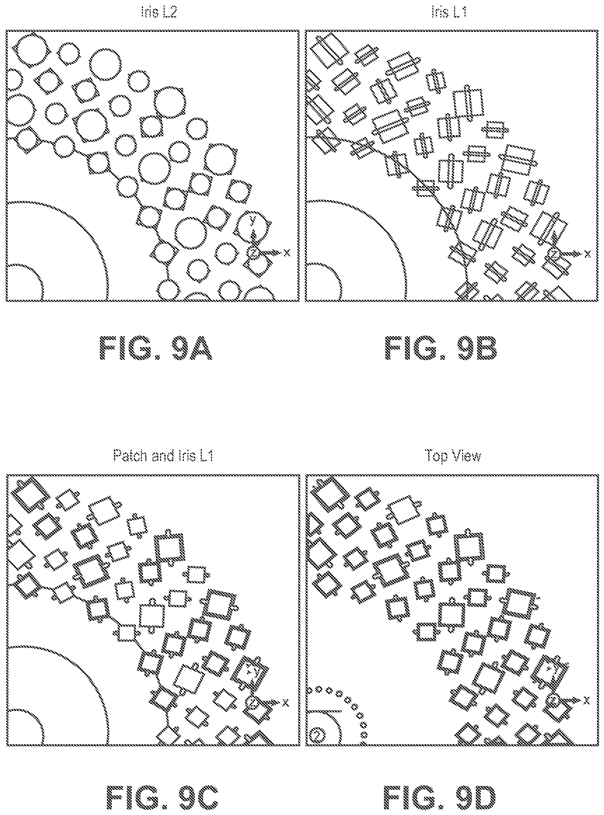

FIG. 9A-9D illustrate one example of the different layers for creating the slotted array. Note that in this example the antenna array has two different types of antenna elements that are used for two different types of frequency bands. FIG. 9A illustrates a portion of the first iris board layer with locations corresponding to the slots according to one example. Referring to FIG. 9A, the circles are open areas/slots in the metallization in the bottom side of the iris substrate, and are for controlling the coupling of elements to the feed (the feed wave). In this example, this layer is an optional layer and is not used in all designs. FIG. 9B illustrates a portion of the second iris board layer containing slots according to one example. FIG. 9C illustrates patches over a portion of the second iris board layer according to one example. FIG. 9D illustrates a top view of a portion of the slotted array according to one example.

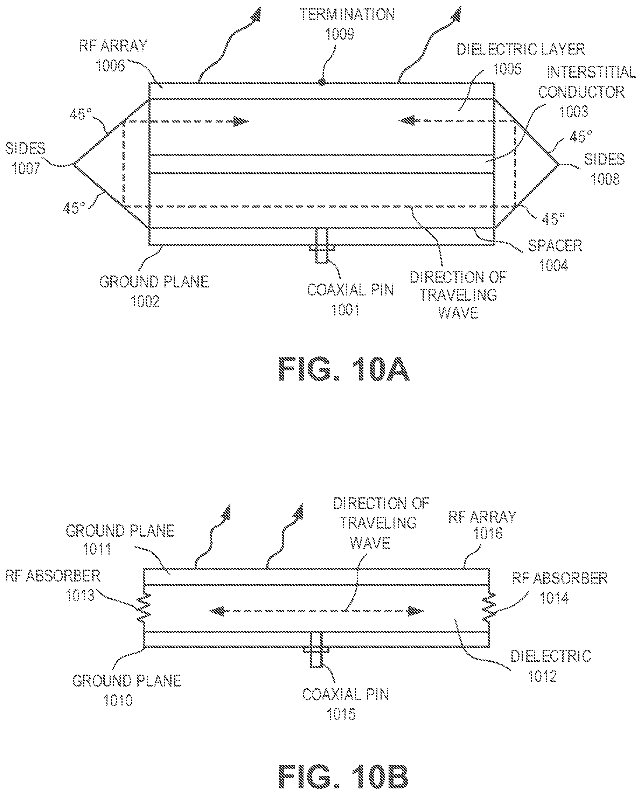

FIG. 10A illustrates a side view of one example of a cylindrically fed antenna structure. The antenna produces an inwardly travelling wave using a double layer feed structure (i.e., two layers of a feed structure). In one example, the antenna includes a circular outer shape, though this is not required. That is, non-circular inward travelling structures can be used. In one example, the antenna structure in FIG. 10A includes the coaxial feed of FIGS. 5A-5B.

Referring to FIG. 10A, a coaxial pin 1001 is used to excite the field on the lower level of the antenna. In one example, coaxial pin 1001 is a 50Ω coax pin that is readily available. Coaxial pin 1001 is coupled (e.g., bolted) to the bottom of the antenna structure, which is conducting ground plane 1002.

Separate from conducting ground plane 1002 is interstitial conductor 1003, which is an internal conductor. In one example, conducting ground plane 1002 and interstitial conductor 1003 are parallel to each other. In one example, the distance between ground plane 1002 and interstitial conductor 1003 is 0.1-0.15". In another example, this distance may be λ/2, where λ is the wavelength of the travelling wave at the frequency of operation.

Ground plane 1002 is separated from interstitial conductor 1003 via a spacer 1004. In one example, spacer 1004 is a foam or air-like spacer. In one example, spacer 1004 comprises a plastic spacer.

On top of interstitial conductor 1003 is dielectric layer 1005. In one example, dielectric layer 1005 is plastic. The purpose of dielectric layer 1005 is to slow the travelling wave relative to free space velocity. In one example, dielectric layer 1005 slows the travelling wave by 30% relative to free space. In one example, the range of indices of refraction that are suitable for beam forming are 1.2-1.8, where free space has by definition an index of refraction equal to 1. Other dielectric spacer materials, such as, for example, plastic, may be used to achieve this effect. Note that materials other than plastic may be used as long as they achieve the desired wave slowing effect. Alternatively, a material with distributed structures may be used as dielectric 1005, such as periodic sub-wavelength metallic structures that can be machined or lithographically defined, for example.

An RF-array 1006 is on top of dielectric 1005. In one example, the distance between interstitial conductor 1003 and RF-array 1006 is 0.1 - 0.15". In another example, this distance may be $\lambda_{eff}/2$, where $\lambda_{eff}$ is the effective wavelength in the medium at the design frequency.

The antenna includes sides 1007 and 1008. Sides 1007 and 1008 are angled to cause a travelling wave feed from coax pin 1001 to be propagated from the area below interstitial conductor 1003 (the spacer layer) to the area above interstitial conductor 1003 (the dielectric layer) via reflection. In one example, the angle of sides 1007 and 1008 are at 45° angles. In an alternative example, sides 1007 and 1008 could be replaced with a continuous radius to achieve the reflection. While **FIG. 10A** shows angled sides that have angle of 45 degrees, other angles that accomplish signal transmission from lower level feed to upper level feed may be used. That is, given that the effective wavelength in the lower feed will generally be different than in the upper feed, some deviation from the ideal 45° angles could be used to aid transmission from the lower to the upper feed level.

In operation, when a feed wave is fed in from coaxial pin 1001, the wave travels outward concentrically oriented from coaxial pin 1001 in the area between ground plane 1002 and interstitial conductor 1003. The concentrically outgoing waves are reflected by sides 1007 and 1008 and travel inwardly in the area between interstitial conductor 1003 and RF array 1006. The reflection from the edge of the circular perimeter causes the wave to remain in phase (i.e., it is an in-phase reflection). The travelling wave is slowed by dielectric layer 1005. At this point, the travelling wave starts interacting and exciting with elements in RF array 1006 to obtain the desired scattering.

To terminate the travelling wave, a termination 1009 is included in the antenna at the geometric center of the antenna. In one example, termination 1009 comprises a pin termination (e.g., a 50Ω pin). In another example, termination 1009 comprises an RF absorber that terminates unused energy to prevent reflections of that unused energy back through the feed structure of the antenna. These could be used at the top of RF array 1006.

**FIG. 10B** illustrates another example of the antenna system with an outgoing wave. Referring to **FIG. 10B,** two ground planes 1010 and 1011 are substantially parallel to each other with a dielectric layer 1012 (e.g., a plastic layer, etc.) in between ground planes 1010 and 1011. RF absorbers 1013 and 1014 (e.g., resistors) couple the two ground planes 1010 and 1011 together. A coaxial pin 1015 (e.g., 50Ω) feeds the antenna. An RF array 1016 is on top of dielectric layer 1012.

In operation, a feed wave is fed through coaxial pin 1015 and travels concentrically outward and interacts with the elements of RF array 1016.

The cylindrical feed in both the antennas of **FIGS. 10A** and **10B** improves the service angle of the antenna. Instead of a service angle of plus or minus forty-five degrees azimuth ($\pm 45°$ Az) and plus or minus twenty-five degrees elevation ($\pm 25°$ El), in one example, the antenna system has a service angle of seventy-five degrees (75°) from the bore sight in all directions. As with any beam forming antenna comprised of many individual radiators, the overall antenna gain is dependent on the gain of the constituent elements, which themselves are angle-dependent. When using common radiating elements, the overall antenna gain typically decreases as the beam is pointed further off bore sight. At 75 degrees off bore sight, significant gain degradation of about 6 dB is expected.

Examples of the antenna having a cylindrical feed solve one or more problems. These include dramatically simplifying the feed structure compared to antennas fed with a corporate divider network and therefore reducing total required antenna and antenna feed volume; decreasing sensitivity to manufacturing and control errors by maintaining high beam performance with coarser controls (extending all the way to simple binary control); giving a more advantageous side lobe pattern compared to rectilinear feeds because the cylindrically oriented feed waves result in spatially diverse side lobes in the far field; and allowing polarization to be dynamic, including allowing left-hand circular, right-hand circular, and linear polarizations, while not requiring a polarizer.

**Array of Wave Scattering Elements**

RF array 1006 of **FIG. 10A** and RF array 1016 of **FIG. 10B** include a wave scattering subsystem that includes a group of patch antennas (i.e., scatterers) that act as radiators. This group of patch antennas comprises an array of scattering metamaterial elements.

In one example, each scattering element in the antenna system is part of a unit cell that consists of a lower conductor, a dielectric substrate and an upper conductor that embeds a complementary electric inductive-capacitive resonator ("complementary electric LC" or "CELC") that is etched in or deposited onto the upper conductor.

In one example, a liquid crystal (LC) is injected in the gap around the scattering element. Liquid crystal is encapsulated in each unit cell and separates the lower conductor associated with a slot from an upper conductor associated with its patch. Liquid crystal has a permittivity that is a function of the orientation of the molecules comprising the liquid crystal, and the orientation of the molecules (and thus the permittivity) can be controlled by adjusting the bias voltage across the liquid crystal. Using this property, the liquid crystal acts as an on/off switch for the transmission of energy from the guided wave to the CELC. When switched on, the CELC emits an electromagnetic wave like an electrically small dipole antenna.

Controlling the thickness of the LC increases the beam switching speed. A fifty percent (50%) reduction in the gap between the lower and the upper conductor (the thickness of the liquid crystal) results in a fourfold increase in speed. In another example, the thickness of the liquid crystal results in a beam switching speed of approximately fourteen milliseconds (14 ms). In one example, the LC is doped in a manner well-known in the art to improve responsiveness so that a seven millisecond (7 ms) requirement can be met.

The CELC element is responsive to a magnetic field that is applied parallel to the plane of the CELC element and perpendicular to the CELC gap complement. When a voltage is applied to the liquid crystal in the metamaterial scattering unit cell, the magnetic field component of the guided wave induces a magnetic excitation of the CELC, which, in turn, produces an electromagnetic wave in the same frequency as the guided wave.

The phase of the electromagnetic wave generated by a single CELC can be selected by the position of the CELC on the vector of the guided wave. Each cell generates a wave in phase with the guided wave parallel to the CELC. Because the CELCs are smaller than the wave length, the output wave has the same phase as the phase of the guided wave as it passes beneath the CELC.

In one example, the cylindrical feed geometry of this antenna system allows the CELC elements to be positioned at forty-five degree (45°) angles to the vector of the wave in the wave feed. This position of the elements enables control of the polarization of the free space wave generated from or received by the elements. In one example, the CELCs are arranged with an inter-element spacing that is less than a free-space wavelength of the operating frequency of the antenna. For example, if there are four scattering elements per wavelength, the elements in the 30 GHz transmit antenna will be approximately 2.5 mm (i.e., 1/4th the 10mm free-space wavelength of 30 GHz).

In one example, the CELCs are implemented with patch antennas that include a patch co-located over a slot with liquid crystal between the two. In this respect, the metamaterial antenna acts like a slotted (scattering) wave guide. With a slotted wave guide, the phase of the output wave depends on the location of the slot in relation to the guided wave.

**Cell Placement**

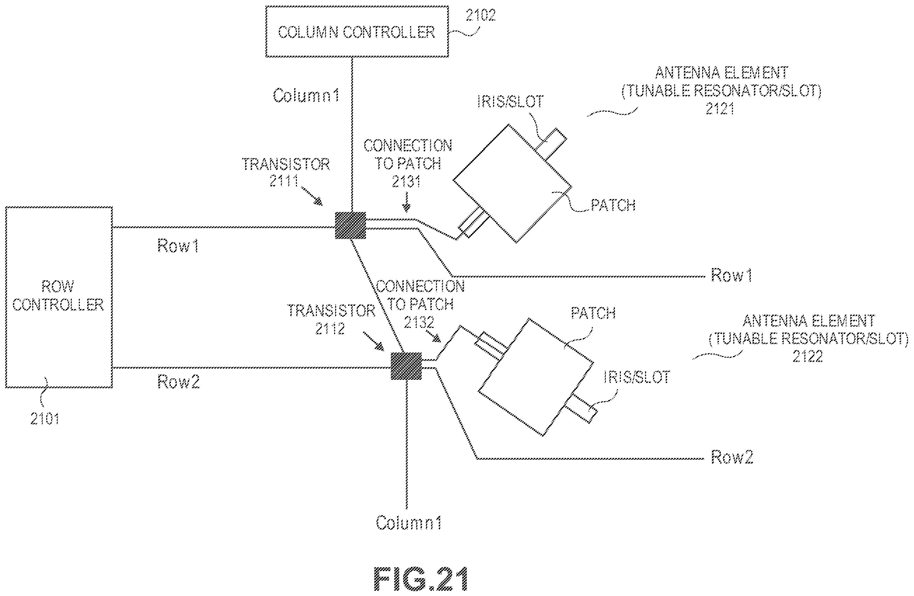

In one example, the antenna elements are placed on the cylindrical feed antenna aperture in a way that allows for a systematic matrix drive circuit. The placement of the cells includes placement of the transistors for the matrix drive. **FIG. 21** illustrates one example of the placement of matrix drive circuitry with respect to antenna elements. Referring to **FIG. 21,** row controller 2101 is coupled to transistors 2111 and 2112, via row select signals Row1 and Row2, respectively, and column controller 2102 is coupled to transistors 2111 and 2112 via column select signal Column1. Transistor 2111 is also coupled to antenna element 2121 via connection to patch 2131, while transistor 2112 is coupled to antenna element 2122 via connection to patch 2132.

In an initial approach to realize matrix drive circuitry on the cylindrical feed antenna with unit cells placed in a non-regular grid, two steps are performed. In the first step, the cells are placed on concentric rings and each of the cells is connected to a transistor that is placed beside the cell and acts as a switch to drive each cell separately. In the second step, the matrix drive circuitry is built in order to connect every transistor with a unique address as the matrix drive approach requires. Because the matrix drive circuit is built by row and column traces (similar to LCDs) but the cells are placed on rings, there is no systematic way to assign a unique address to each transistor. This mapping problem results in very complex circuitry to cover all the transistors and leads to a significant increase in the number of physical traces to accomplish the routing. Because of the high density of cells, those traces disturb the RF performance of the antenna due to coupling effect. Also, due to the complexity of traces and high packing density, the routing of the traces cannot be accomplished by commercial available layout tools.

In one example, the matrix drive circuitry is predefined before the cells and transistors are placed. This ensures a minimum number of traces that are necessary to drive all the cells, each with a unique address. This strategy reduces the complexity of the drive circuitry and simplifies the routing, which subsequently improves the RF performance of the antenna.

More specifically, in one approach, in the first step, the cells are placed on a regular rectangular grid composed of rows and columns that describe the unique address of each cell. In the second step, the cells are grouped and transformed to concentric circles while maintaining their address and connection to the rows and columns as defined in the first step. A goal of this transformation is not only to put the cells on rings but also to keep the distance between cells and the distance between rings constant over the entire aperture. In order to accomplish this goal, there are several ways to group the cells.

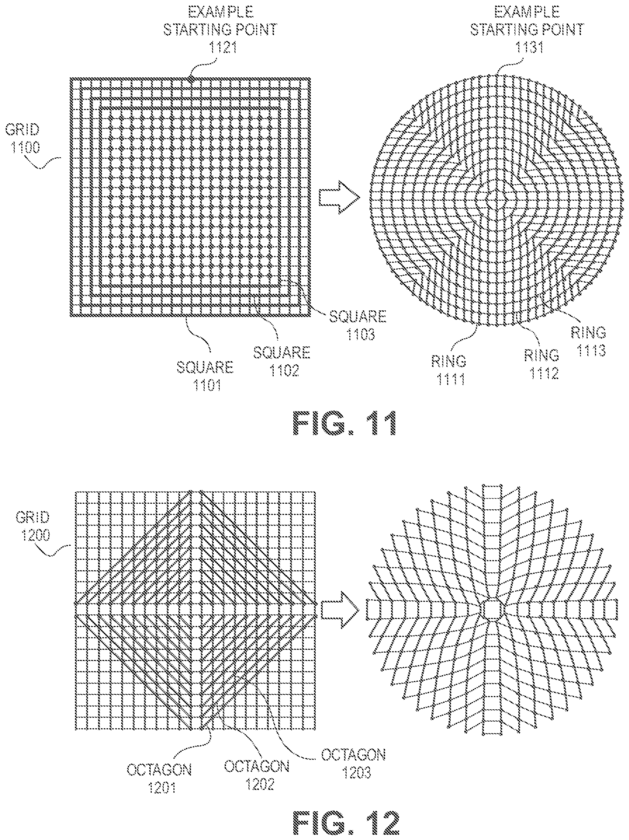

**FIG. 11** shows an example where cells are grouped to form concentric squares (rectangles). Referring to **FIG. 11,** squares 1101-1103 are shown on the grid 1100 of rows and columns. In these examples, the squares and not all of the squares create the cell placement on the right side of **FIG. 7.** Each of the squares, such as squares 1101-1103, are then, through a mathematical conformal mapping process, transformed into rings, such as rings 1111-1113 of antenna elements. For example, the outer ring 1111 is the transformation of the outer square 1101 on the left.

The density of the cells after the transformation is determined by the number of cells that the next larger square contains in addition to the previous square. In one example, using squares results in the number of additional antenna elements, ΔN, to be 8 additional cells on the next larger square. In one example, this number is constant for the entire aperture. In one example, the ratio of cellpitch1 (CP1: ring to ring distance) to cellpitch2 (CP2: distance cell to cell along a ring) is given by:

$$CP1CP2 = \frac{\Delta N}{2\pi}$$

Thus, CP2 is a function of CP1 (and vice versa). The cell pitch ratio for the example in FIG. 7 is then

$$\frac{CP1}{CP2} = \frac{8}{2\pi} = 1.2732$$

which means that the CP1 is larger than CP2.

In one example, to perform the transformation, a starting point on each square, such as starting point 1121 on square 1101, is selected and the antenna element associated with that starting point is placed on one position of its corresponding ring, such as starting point 1131 on ring 1111. For example, the x-axis or y-axis may be used as the starting point. Thereafter, the next element on the square proceeding in one direction (clockwise or counterclockwise) from the starting point is selected and that element placed on the next location on the ring going in the same direction (clockwise or counterclockwise) that was used in the square. This process is repeated until the locations of all the antenna elements have been assigned positions on the ring. This entire square to ring transformation process is repeated for all squares.

However, according to analytical studies and routing constraints, it is preferred to apply a CP2 larger than CP1. To accomplish this, a second strategy shown in **FIG. 12** is used. Referring to **FIG. 12,** the cells are grouped initially into octagons, such as octagons 1201-1203, with respect to a grid 1200. By grouping the cells into octagons, the number of additional antenna elements ΔN equals 4, which gives a ratio:

$$CP1CP2 = \frac{4}{2\pi} = 0.6366$$

which results in CP2>CP1.

The transformation from octagon to concentric rings for cell placement according to **FIG. 12** can be performed in the same manner as that described above with respect to **FIG. 11** by initially selecting a starting point.

In one example, the cell placements disclosed with respect to **FIGS. 11** and **12** have a number of features. These features include:

1) A constant CP1/CP2 over the entire aperture (Note that in one example an antenna that is substantially constant (e.g., being 90% constant) over the aperture will still function);
2) CP2 is a function of CP1;
3) There is a constant increase per ring in the number of antenna elements as the ring distance from the centrally located antenna feed increases;
4) All the cells are connected to rows and columns of the matrix;
5) All the cells have unique addresses;
6) The cells are placed on concentric rings; and

There is rotational symmetry in that the four quadrants are identical and a ¼ wedge can be rotated to build out the array. This is beneficial for segmentation.

In other examples, while two shapes are given, any shapes may be used. Other increments are also possible (e.g., 6 increments).

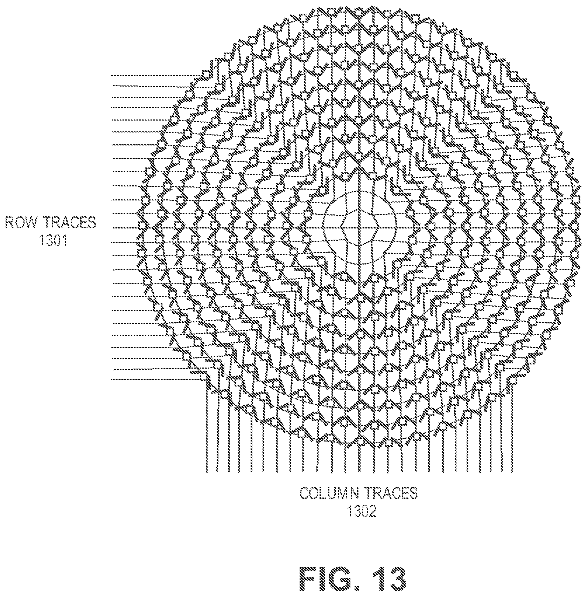

**FIG. 13** shows an example of a small aperture including the irises and the matrix drive circuitry. The row traces 1301 and column traces 1302 represent row connections and column connections, respectively. These lines describe the matrix drive network and not the physical traces (as physical traces may have to be routed around antenna elements, or parts thereof). The square next to each pair of irises is a transistor.

**FIG. 13** also shows the potential of the cell placement technique for using dual-transistors where each component drives two cells in a PCB array. In this case, one discrete device package contains two transistors, and each transistor drives one cell.

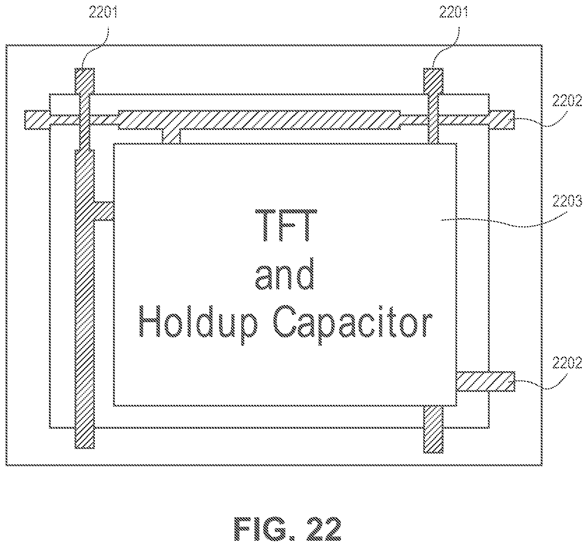

In one example, a TFT package is used to enable placement and unique addressing in the matrix drive. **FIG. 22** illustrates one example of a TFT package. Referring to **FIG. 22,** a TFT and a hold capacitor 2203 is shown with input and output ports. There are two input ports connected to traces 2201 and two output ports connected to traces 2202 to connect the TFTs together using the rows and columns. In one example, the row and column traces cross in 90° angles to reduce, and potentially minimize, the coupling between the row and column traces. In one example, the row and column traces are on different layers.

Another feature of the proposed cell placement shown in **FIGS. 11-13** is that the layout is a repeating pattern in which each quarter of the layout is the same as the others. This allows the sub-section of the array to be repeated rotation-wise around the location of the central antenna feed, which in turn allows a segmentation of the aperture into sub-apertures. This helps in fabricating the antenna aperture.

In another example, the matrix drive circuitry and cell placement on the cylindrical feed antenna is accomplished in a different manner. To realize matrix drive circuitry on the cylindrical feed antenna, a layout is realized by repeating a subsection of the array rotation-wise. This example also allows the cell density that can be used for illumination tapering to be varied to improve the RF performance.

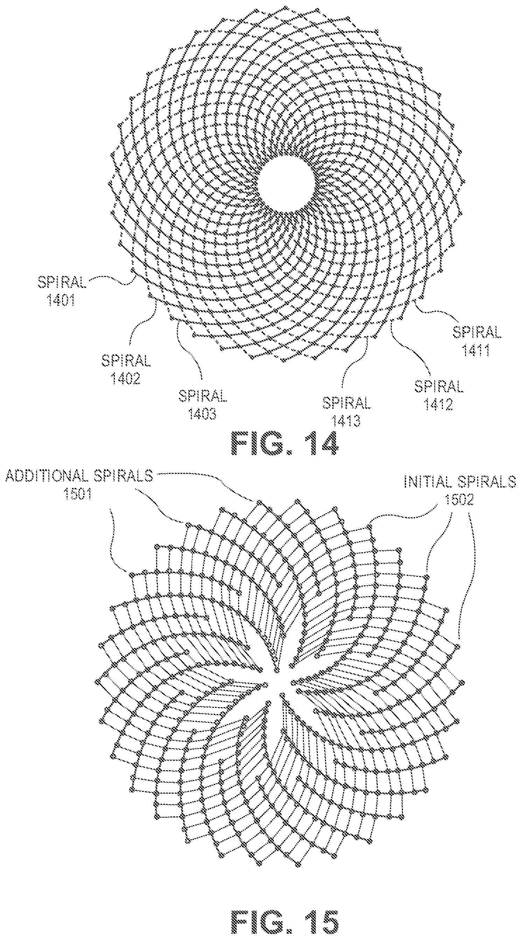

In this alternative approach, the placement of cells and transistors on a cylindrical feed antenna aperture is based on a lattice formed by spiral shaped traces. **FIG. 14** shows an example of such lattice clockwise spirals, such as spirals 1401-1403, which bend in a clockwise direction and the spirals, such as spirals 1411-1413, which bend in a clockwise, or opposite, direction. The different orientation of the spirals results in intersections between the clockwise and counterclockwise spirals. The resulting lattice provides a unique address given by the intersection of a counterclockwise trace and a clockwise trace and can therefore be used as a matrix drive lattice. Furthermore, the intersections can be grouped on concentric rings, which is crucial for the RF performance of the cylindrical feed antenna.

Unlike the approaches for cell placement on the cylindrical feed antenna aperture discussed above, the approach discussed above in relation to **FIG. 14** provides a non-uniform distribution of the cells. As shown in **FIG. 14,** the distance between the cells increases with the increase in radius of the concentric rings. In one example, the varying density is used as a method to incorporate an illumination tapering under control of the controller for the antenna array.

Due to the size of the cells and the required space between them for traces, the cell density cannot exceed a certain number. In one example, the distance is 1/5 based on the frequency of operation. As described above, other distances may be used. In order to avoid an overpopulated density close to the center, or in other words to avoid an under-population close to the edge, additional spirals can be added to the initial spirals as the radius of the successive concentric rings increases. **FIG. 15** shows an example of cell placement that uses additional spirals to achieve a more uniform density. Referring to **FIG. 15,** additional spirals, such as additional spirals 1501, are added to the initial spirals, such as spirals 1502, as the radius of the successive concentric rings increases. According to analytical simulations, this approach provides an RF performance that converges the performance of an entirely uniform distribution of cells. In one example, this design provides a better side lobe behavior because of the tapered element density than some examples described above.

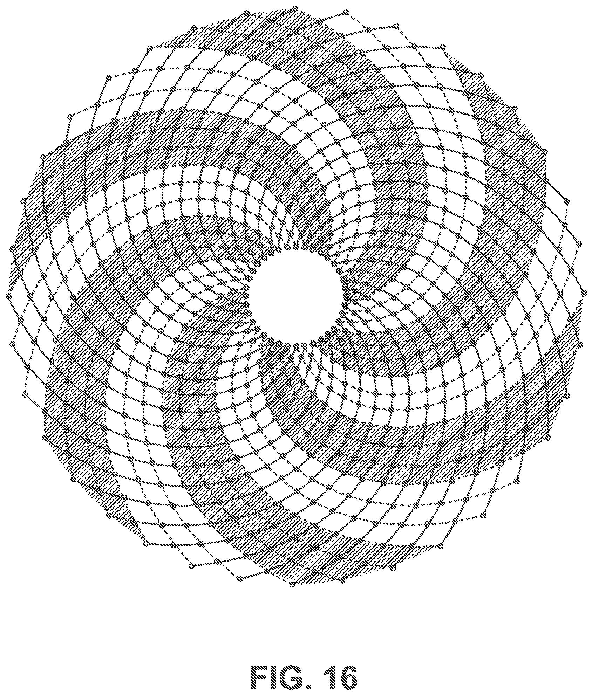

Another advantage of the use of spirals for cell placement is the rotational symmetry and the repeatable pattern which can simplify the routing efforts and reducing fabrication costs. **FIG. 16** illustrates a selected pattern of spirals that is repeated to fill the entire aperture.

In one example, the cell placements disclosed with respect to **FIGS. 14-16** have a number of features. These features include:

1) CP1/CP2 is not over the entire aperture;
2) CP2 is a function of CP1;
3) There is no increase per ring in the number of antenna elements as the ring distance from the centrally located antenna feed increases;
4) All the cells are connected to rows and columns of the matrix;
5) All the cells have unique addresses;
6) The cells are placed on concentric rings; and
7) There is rotational symmetry (as described above).

Thus, the cell placement examples described above in conjunction with **FIGS. 14-16** have many similar features to the cell placement examples described above in conjunction with

**FIGS. 11-13.**

**Aperture Segmentation**

In one example, the antenna aperture is created by combining multiple segments of antenna elements together. This requires that the array of antenna elements be segmented and the segmentation ideally requires a repeatable footprint pattern of the antenna. In one example, the segmentation of a cylindrical feed antenna array occurs such that the antenna footprint does not provide a repeatable pattern in a straight and inline fashion due to the different rotation angles of each radiating element. One goal of the segmentation approach disclosed herein is to provide segmentation without compromising the radiation performance of the antenna.

While segmentation techniques described herein focuses improving, and potentially maximizing, the surface utilization of industry standard substrates with rectangular shapes, the segmentation approach is not limited to such substrate shapes.

In one example, segmentation of a cylindrical feed antenna is performed in a way that the combination of four segments realize a pattern in which the antenna elements are placed on concentric and closed rings. This aspect is important to maintain the RF performance. Furthermore, in one example, each segment requires a separate matrix drive circuitry.

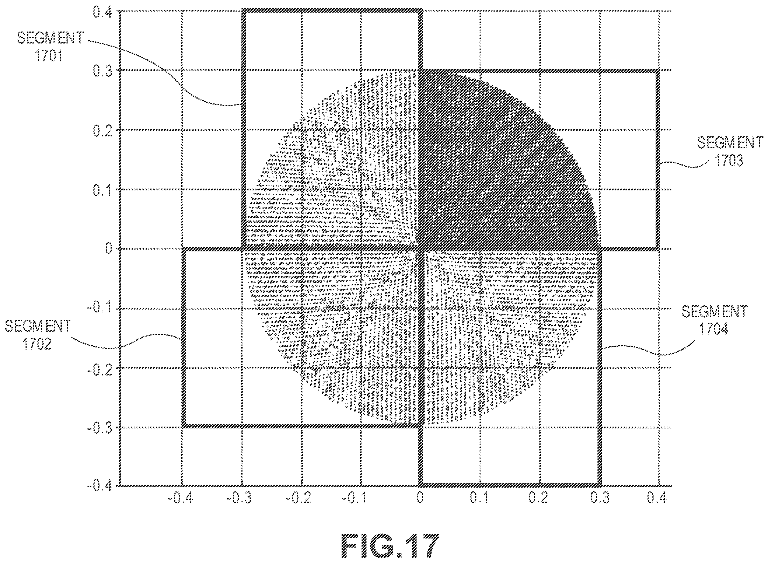

**FIG. 17** illustrates segmentation of a cylindrical feed aperture into quadrants. Referring to **FIG. 17,** segments 1701-1704 are identical quadrants that are combined to build a round antenna aperture. The antenna elements on each of segments 1701-1704 are placed in portions of rings that form concentric and closed rings when segments 1701-1704 are combined. To combine the segments, segments are mounted or laminated to a carrier. In another example, overlapping edges of the segments are used to combine them together. In this case, in one example, a conductive bond is created across the edges to prevent RF from leaking. Note that the element type is not affected by the segmentation.

As the result of this segmentation method illustrated in **FIG. 17,** the seams between segments 1701-1704 meet at the center and go radially from the center to the edge of the antenna aperture. This configuration is advantageous since the generated currents of the cylindrical feed propagate radially and a radial seam has a low parasitic impact on the propagated wave.

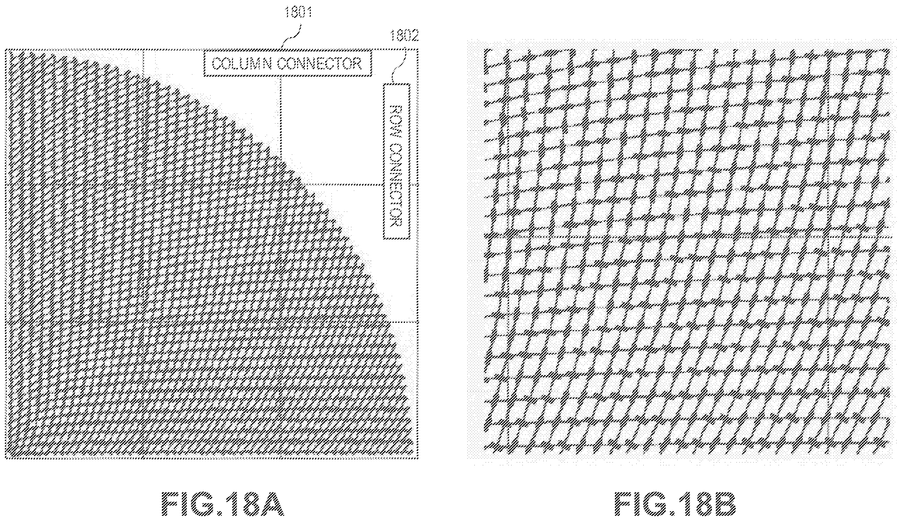

As shown in **FIG. 17,** rectangular substrates, which are a standard in the LCD industry, can also be used to realize an aperture. **FIG. 18A** and **18B** illustrate a single segment of **FIG. 17** with the applied matrix drive lattice. The matrix drive lattice assigns a unique address to each of transistor. Referring to **FIGS. 18A** and **18B,** a column connector 1801 and row connector 1802 are coupled to drive lattice lines. **FIG. 18B** also shows irises coupled to lattice lines.

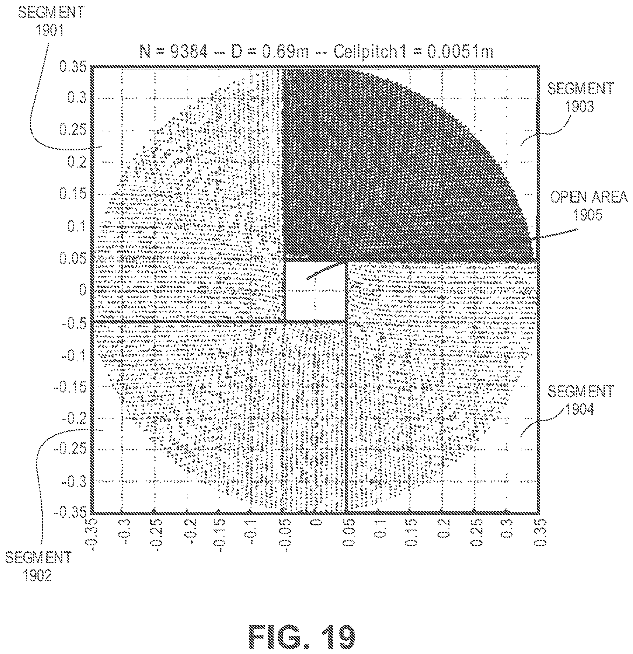

As is evident from **FIG. 17,** a large area of the substrate surface cannot be populated if a non-square substrate is used. In order to have a more efficient usage of the available surface on a non-square substrate, in another example, the segments are on rectangular boards but utilize more of the board space for the segmented portion of the antenna array. One example of such an example is shown in **FIG. 19.** Referring to **FIG. 19,** the antenna aperture is created by combining segments 1901-1904, which comprises substrates (e.g., boards) with a portion of the antenna array included therein. While each segment does not represent a circle quadrant, the combination of four segments 1901-1904 closes the rings on which the elements are placed. That is, the antenna elements on each of segments 1901-1904 are placed in portions of rings that form concentric and closed rings when segments 1901-1904 are combined. In one example, the substrates are combined in a sliding tile fashion, so that the longer side of the non-square board introduces a rectangular open area 1905. Open area 1905 is where the centrally located antenna feed is located and included in the antenna.

The antenna feed is coupled to the rest of the segments when the open area exists because the feed comes from the bottom, and the open area can be closed by a piece of metal to prevent radiation from the open area. A termination pin may also be used.

The use of substrates in this fashion allows use of the available surface area more efficiently and results in an increased aperture diameter.

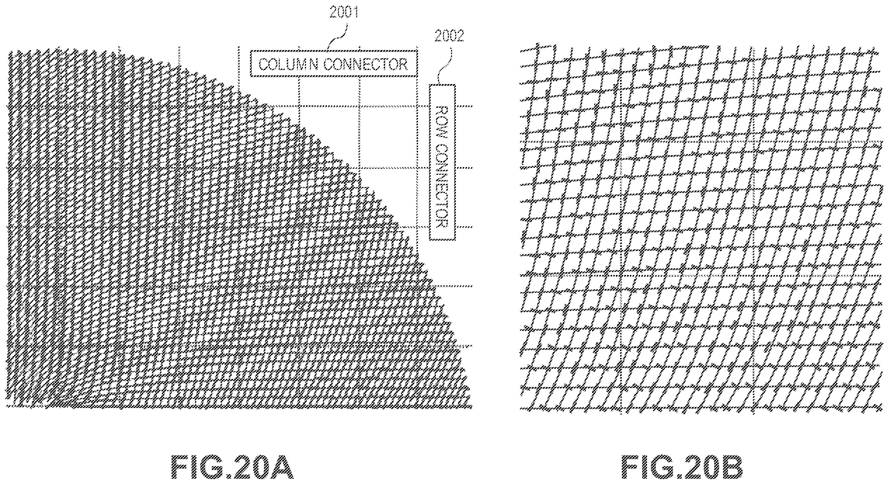

Similar to the example shown in **FIG. 17, 18A** and **18B,** this example allows use of a cell placement strategy to obtain a matrix drive lattice to cover each cell with a unique address. **FIG. 20A** and **20B** illustrate a single segment of **FIG. 19** with the applied matrix drive lattice. The matrix drive lattice assigns a unique address to each of transistor. Referring to **FIG. 20A** and **20B,** a column connector 2001 and row connector 2002 are coupled to drive lattice lines. **FIG. 20B** also shows irises.

For both approaches described above, the cell placement may be performed based on a recently disclosed approach which allows the generation of matrix drive circuitry in a systematic and predefined lattice, as described above.

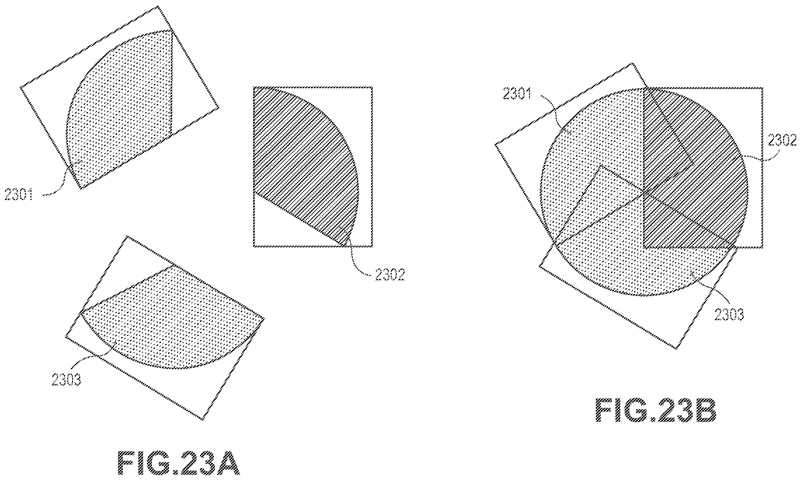

While the segmentations of the antenna arrays above are into four segments, this is not a requirement. The arrays may be divided into an odd number of segments, such as, for example, three segments or five segments. **FIGS. 23A** and **23B** illustrate one example of an antenna aperture with an odd number of segments. Referring to **FIG. 23A,** there are three segments, segments 2301-2303, that are not combined. Referring to **FIG. 23B,** the three segments, segments 2301-2303, when combined, form the antenna aperture. These arrangements are not advantageous because the seams of all the segments do not go all the way through the aperture in a straight line. However, they do mitigate side lobes.

Whereas many alterations and modifications of the present invention will no doubt become apparent to a person of ordinary skill in the art after having read the foregoing description, it is to be understood that any particular example shown and described by way of illustration is in no way intended to be considered limiting. Therefore, references to details of various examples are not intended to limit the scope of the claims which in themselves recite only those features regarded as essential to the invention.

**Claims**

1. A hub (107, 300) for satellite communications comprising:

   an interface (108) to facilitate satellite communications between a terminal (102) and satellites (104-1, 104-2) in a constellation for a geographic region, the terminal (102) includes one or more antennas (101), each antenna (101) having an aperture with a receive portion to receive radio frequency, RF, signals and a transmit portion to transmit RF signals; and one or more processors (314) coupled to the interface (108), the one or more processors (314) configured to implement a broker (109) for the hub (107, 300), the broker (109) is to plan and facilitate RF links between the terminal (102) and satellites (104-1, 104-2) in the constellation based on one more characteristics for satellite communications, and

   wherein the broker (109) is to schedule which RF links to use for the one or more antennas (101) of the terminal (102) from one or more satellites (104-1, 104-2) to another satellite (104-1, 104-2) or set of satellites (104-1, 104-2) based on terminal characteristics including projected path of the terminal vehicle.

2. The hub (107, 300) of claim 1,
   wherein the one or more characteristics include factors related to at least known channel impairments including weather, geographic features, and line-of-sight, LOS, obstructions, detected or known in-channel interferers, characteristics of target satellites (104-1, 104-2) including available capacity, orbital path/ephemeris data, transmit and receive frequencies, per-bit delivery cost, effective isotropic radiated power, EIRP, and terminal gain-to-noise temperature, G/T, known adjacent satellites (104-1, 104-2), data type and priority, terminal characteristics including scan roll-off, operating frequencies, link capacity, and modulation and coding capabilities, location and RF characteristics of alternate terminals, satellite preferences and lockout, security, capacity cost, or subscription preference derived from service agreements, historical remote terminal demand profiles, and data remaining on subscription packages.

3. The hub (107, 300) of claim 1,
   wherein the broker (109) is to schedule antenna pointing transitions for the one or more antennas (101) of the terminal (102) from one or more satellites (104-1, 104-2) to another satellite (104-1, 104-2) or set of satellites (104-1, 104-2); wherein preferably the broker (109) is to synchronize a crosslink switch such that the receive portion of the aperture of the one or more antennas (101) receives RF signals from a first satellite and the transmit portion of the aperture of the one or more antennas (101) transmits RF signals to a second satellite.

4. The hub (107, 300) of claim 1,
   wherein the broker (109) is to connect to a capacity market to make offers on bids for the terminal (102) from spectrum providers operating satellites (104-1, 104-2) or terrestrial links in the geographic region.

5. The hub (107, 300) of claim 4,
   wherein the offers are based on rules by an operator of the hub (107, 300) or sent directly by the operator of the hub (107, 300); wherein preferably the broker (109) for a winning bid is to broker (109) a service and transition RF links for the terminal (102) through a selected satellite.

6. The hub (107, 300) of claim 4,
   wherein the broker (109) is to receive bids including a spectral price, guaranteed link capacity, estimated link capacity, minimum duration of capacity, expected duration of capacity, or transponder identifier including a satellite identifier.

7. The hub (107, 300) of claim 4,
   wherein the broker (109) is to generate the offers on the bids based on user preferences, price, provider profile, and quality of service estimates

8. The hub (107, 300) of claim 1,

   wherein the broker (109) is to map and predict RF link performance between the terminal (102) and known satellites (104-1, 104-2) for the geographic region;
   wherein preferably the broker (109) is to aggregate historical data from terminal reports, up-to-date satellite locations and RF characteristics including terminal gain-to-noise temperature G/T and effective isotropic radiated power EIRP of a target satellite and adjacent satellites (104-1, 104-2), and measured atmospheric conditions;
   wherein further preferably terminal reports include at least geographic region, time, RF channel settings for the terminal (102).

9. The hub (107, 300) of claim 1,
   wherein the broker (109) is to detect RF link inconsistencies in link performance due to potential blockage, unreported weather shifts or interferers for providing an alert and determining facture capacity evaluation and network balancing for the terminal (102).

10. The hub (107, 300) of claim 1,
    wherein the terminal (102) is a ground-based terminal (102) or a mobile-based terminal (102) on a vehicle, aircraft, marine vessel, or movable machine or object.

**Patentansprüche**

1. Hub (107, 300) für Satellitenkommunikationen, aufweisend:

   eine Schnittstelle (108) zum Erleichtern der Satellitenkommunikation zwischen einem Endgerät (102) und Satelliten (104-1, 104-2) in einer Konstellation für eine geografische Region, wobei das Endgerät (102) eine oder mehrere Antennen (101) aufweist, wobei jede Antenne (101) eine Öffnung mit einem Empfangsteil zum Empfangen von Hochfrequenzsignalen, HF, und einem Sendeteil zum Senden von HF-Signalen aufweist; und
   einen oder mehrere Prozessoren (314), die mit der Schnittstelle (108) gekoppelt sind, wobei der eine oder die mehreren Prozessoren (314) derart eingerichtet sind, dass sie einen Vermittler (109) für den Hub (107, 300) implementieren, wobei der Vermittler (109) dazu dient, HF-Verbindungen zwischen dem Endgerät (102) und Satelliten (104-1, 104-2) in der Konstellation basierend auf einem oder mehreren Eigenschaften für die Satellitenkommunikation zu planen und zu erleichtern, und wobei der Vermittler (109) dazu dient, zu planen, welche HF-Verbindungen für die eine oder mehreren Antennen (101) des Endgeräts (102) von einem oder mehreren Satelliten (104-1, 104-2) zu einem anderen Satelliten (104-1, 104-2) oder einem Satz von Satelliten (104-1, 104-2) basierend auf Endgeräteeigenschaften einschließlich des projizierten Wegs des Endgerätefahrzeugs zu verwenden sind.

2. Hub (107, 300) nach Anspruch 1, wobei die eine oder mehreren Eigenschaften Faktoren aufweisen, die mit mindestens bekannten Kanalbeeinträchtigungen zusammenhängen aufweisend Wetter, geografische Eigenschaften und Sichtlinie, LOS, - Hindernissen; erkannten oder bekannten Störungen im Kanal, Eigenschaften von Zielsatelliten (104-1, 104-2) mit verfügbarer Kapazität, Orbitalpfad-/Ephemeridendaten, Sende- und Empfangsfrequenzen, Versandkosten pro Bit, effektiver isotroper Strahlungsleistung, EIRP; und Verstärkungs-/Rauschtemperatur, G/T, des Endgeräts, bekannte benachbarte Satelliten (104-1, 104-2), Datentyp und -priorität, Endgeräteeigenschaften aufweisend Scan-Roll-Off, Betriebsfrequenzen, Verbindungskapazität sowie Modulations- und Kodierungsfähigkeiten, Standort und HF-Eigenschaften alternativer Endgeräte, Satellitenpräferenzen und -sperre, Sicherheit, Kapazitätskosten oder aus Dienstvereinbarungen abgeleitete Abonnementpräferenzen, historische Bedarfsprofile von Gegenstellen und verbleibende Daten für Abonnementpakete.

3. Hub (107, 300) nach Anspruch 1,

wobei der Vermittler (109) dazu dient, Antennenausrichtungsübergänge für die eine oder mehreren Antennen (101) des Endgeräts (102) von einem oder mehreren Satelliten (104-1, 104-2) zu einem anderen Satelliten (104-1, 104-2) oder einem Satz von Satelliten (104-1, 104-2) zu planen; wobei vorzugsweise der Vermittler (109) dazu dient, einen Querverbindungsschalter so zu synchronisieren, dass der Empfangsabschnitt der Öffnung der einen oder mehreren Antennen (101) HF-Signale von einem ersten Satelliten empfängt und der Sendeabschnitt der Öffnung der einen oder mehreren Antennen (101) HF-Signale an einen zweiten Satelliten sendet.

4. Hub (107, 300) nach Anspruch 1, wobei der Vermittler (109) eine Verbindung zu einem Kapazitätsmarkt herstellen soll, um Gebote für das Endgerät (102) von Spektrum-Anbietern abzugeben, die Satelliten (104-1, 104-2) oder terrestrische Verbindungen in der geografischen Region betreiben.

5. Hub (107, 300) nach Anspruch 4, wobei die Angebote auf Regeln eines Betreibers des Hubs (107, 300) beruhen oder direkt von dem Betreiber des Hubs (107, 300) gesendet werden; wobei vorzugsweise der Vermittler (109) für ein erfolgreiches Gebot einen Dienst und eine Übergangs-HF-Verbindung für das Endgerät (102) über einen ausgewählten Satelliten vermittelt (109).

6. Hub (107, 300) nach Anspruch 4, wobei der Vermittler (109) Gebote empfangen soll, die einen Spektralpreis, eine garantierte Verbindungskapazität, eine geschätzte Verbindungskapazität, eine Mindestdauer der Kapazität, eine erwartete Dauer der Kapazität oder eine Transponderkennung einschließlich einer Satellitenkennung enthalten.

7. Hub (107, 300) nach Anspruch 4, wobei der Vermittler (109) die Angebote erstellen soll basierend auf Benutzerpräferenzen, dem Preis, dem Anbieterprofil und Schätzungen der Dienstqualität.

8. Hub (107, 300) nach Anspruch 1,

wobei der Vermittler (109) die Aufgabe hat, die HF-Verbindungsleistung zwischen dem Endgerät (102) und bekannten Satelliten (104-1, 104-2) für die geografische Region abzubilden und vorherzusagen; wobei der Vermittler (109) vorzugsweise historische Daten aus Endgerätberichten, aktuelle Satellitenstandorte und HF-Eigenschaften, einschließlich der Verstärkungs-/Rauschtemperatur G/T des Endgeräts und der effektiven isotropen Strahlungsleistung EIRP eines Zielsatelliten und benachbarter Satelliten (104-1, 104-2), sowie gemessene atmosphärische Bedingungen zusammenfasst; wobei die Endgeräteberichte vorzugsweise mindestens die geografische Region, die Zeit und die HF-Kanaleinstellungen für das Endgerät (102) enthalten.

9. Hub (107, 300) nach Anspruch 1, wobei der Vermittler (109) dazu dient, Unstimmigkeiten in der HF-Verbindungsleistung aufgrund von potenziellen Hindernissen, nicht gemeldeten Wetterverschiebungen oder Störern zu erkennen, um eine Warnung zu bereitzustellen und die Bewertung der Faktorkapazität und den Netzausgleich für das Endgerät (102) zu ermitteln.

**10.** Hub (107, 300) nach Anspruch 1,
wobei das Endgerät (102) ein bodengestütztes Endgerät (102) oder ein mobiles Endgerät (102) auf einem Fahrzeug, Flugzeug, Schiff oder einer beweglichen Maschine oder einem beweglichen Gegenstand ist.

**Revendications**

**1.** Un concentrateur (107, 300) pour les communications par satellite, comprenant :

une interface (108) pour faciliter les communications par satellite entre un terminal (102) et des satellites (104-1, 104-2) dans une constellation pour une région géographique, le terminal (102) comprenant une ou plusieurs antennes (101), chaque antenne (101) ayant une ouverture avec une partie réception pour recevoir des signaux de radiofréquence, RF, et une partie émission pour transmettre des signaux RF ; et un ou plusieurs processeurs (314) couplés à l'interface (108), ledit un ou lesdits plusieurs processeurs (314) configurés pour mettre en œuvre un courtier (109) pour le concentrateur (107, 300), le courtier (109) étant à planifier et faciliter les liaisons RF entre le terminal (102) et les satellites (104-1, 104-2) dans la constellation sur la base d'une ou de plusieurs caractéristiques pour les communications par satellite, et dans lequel le courtier (109) est à planifier quelles liaisons RF à utiliser pour ladite une ou lesdites plusieurs antennes (101) du terminal (102) à partir d'un ou de plusieurs satellites (104-1, 104-2) vers un autre satellite (104-1, 104-2) ou un ensemble de satellites (104-1, 104-2) sur la base de caractéristiques de terminal, comprenant une trajectoire projetée du véhicule terminal.

**2.** Le concentrateur (107, 300) selon la revendication 1, dans lequel ladite une ou lesdites plusieurs caractéristiques comprennent des facteurs liés à au moins des dégradations connues de canal, comprenant les conditions météorologiques, les caractéristiques géographiques et les obstructions de ligne de visée, LOS, des brouilleurs détectés ou connus dans le canal, les caractéristiques de satellites cibles (104-1, 104-2), comprenant la capacité disponible, les données de trajectoire orbitale/éphémérides, les fréquences d'émission et de réception, les coûts de livraison par bit, la puissance isotrope rayonnée effective (PIRE) et la température gain-bruit (G/T) de terminal, les satellites adjacents connus (104-1, 104-2), le type et la priorité de données, les caractéristiques de terminal, comprenant une décroissance de balayage, les fréquences de fonctionnement, la capacité de liaison et les capacités de modulation et de codage, la localisation et les caractéristiques RF de terminaux alternatifs, les préférences et le verrouillage de satellites, la sécurité, les coûts de capacité ou les préférences d'abonnement dérivées d'accords de service, les profils historiques de demande de terminaux distants et les données restantes sur les formules d'abonnement.

**3.** Le concentrateur (107, 300) selon la revendication 1,

dans lequel le courtier (109) est à planifier les transitions de pointage d'antenne pour ladite une ou lesdites plusieurs antennes (101) du terminal (102) d'un ou de plusieurs satellites (104-1, 104-2) vers un autre satellite (104-1, 104-2) ou un ensemble de satellites (104-1, 104-2) ;
dans lequel, de préférence, le courtier (109) est à synchroniser un commutateur de liaison croisée de sorte que la partie réception de l'ouverture de ladite une ou desdites plusieurs antennes (101) reçoit des signaux RF d'un premier satellite et la partie émission de l'ouverture de ladite une ou desdites plusieurs antennes (101) transmet des signaux RF à un deuxième satellite.

**4.** Le concentrateur (107, 300) selon la revendication 1, dans lequel le courtier (109) est à connecter à un marché de capacité afin de faire des offres sur des soumissions pour le terminal (102) auprès de fournisseurs de spectre exploitant des satellites (104-1, 104-2) ou des liaisons terrestres dans la région géographique.

**5.** Le concentrateur (107, 300) selon la revendication 4,

dans lequel les offres sont basées sur des règles d'un opérateur du concentrateur (107, 300) ou sont envoyées directement par l'opérateur du concentrateur (107, 300) ;
dans lequel, de préférence, le courtier (109) d'une soumission gagnante est à négocier (109) un service et à passer des liaisons RF pour le terminal (102) par l'intermédiaire d'un satellite sélectionné.

**6.** Le concentrateur (107, 300) selon la revendication 4, dans lequel le courtier (109) est à recevoir des offres comprenant un prix spectral, une capacité de liaison garantie, une capacité de liaison estimée, une durée minimale de capacité, une durée attendue de capacité, ou un identifiant de transpondeur comprenant un identifiant de satellite.

7. Le concentrateur (107, 300) selon la revendication 4, dans lequel le courtier (109) est à générer les offres sur les soumissions en fonction de préférences d'utilisateur, du prix, du profil du fournisseur et des estimations de la qualité de service.

8. Le concentrateur (107, 300) selon la revendication 1,

   dans lequel le courtier (109) est à cartographier et prédire la performance de liaison RF entre le terminal (102) et les satellites connus (104-1, 104-2) pour la région géographique ;
   dans lequel, de préférence, le courtier (109) est à agréger des données historiques provenant de rapports de terminaux, des emplacements de satellites actualisés et des caractéristiques RF comprenant la température gain-bruit G/T de terminal et la puissance isotrope rayonnée effective PIRE d'un satellite cible et de satellites adjacents (104-1, 104-2), ainsi que les conditions atmosphériques mesurées ;
   dans lequel, de préférence encore, les rapports de terminaux comprennent au moins la région géographique, l'heure, les paramètres de canal RF pour le terminal (102).

9. Le concentrateur (107, 300) selon la revendication 1, dans lequel le courtier (109) est à détecter des incohérences de liaison RF dans la performance de liaison en raison d'un blocage potentiel, de changements météorologiques non signalés ou de brouilleurs pour fournir une alerte et déterminer une évaluation de capacité de facture et un équilibrage de réseau pour le terminal (102).

10. Le concentrateur (107, 300) selon la revendication 1, dans lequel le terminal (102) est un terminal au sol (102) ou un terminal mobile (102) à bord d'un véhicule, d'un aéronef, d'un navire ou d'une machine mobile ou d'un objet mobile.

Rx-SATELLITE
104-1

Tx-SATELLITE
104-2

100

| BROKER 109 | INTERFACE 108 |
|---|---|

HUB
107

TLE
SOURCE
106

| ANTENNA 101 |
|---|

TERMINAL
102

GEOGRAPHIC
REGION
103

FIG. 1

EP 3 535 873 B1

FIG. 2A

EP 3 535 873 B1

FIG. 2B

**FIG. 2C**

120

EP 3 535 873 B1

FIG. 3

EP 3 535 873 B1

400

PULL UPTO DATE TLE SATELLITE INFORMATION
422

CALCULATE RELATIVE PATH FOR EACH CROSSLINKED
SATELLITE BASED ON TLE INFORMATION
404

PROPAGATE CROSSLINKING PLANNING INFROMATION
(E.G., TIMING, FREQUENCY, AND CAPACITY)
406

SYNCRHONIZE FRAME INJECTION POINT FOR
CROSSLINKING
408

MONITOR STATUS OF CROSSLINKING SATELLITES
AND TERMINAL
410

FIG. 4A

420

```
┌─────────────────────────────────────────────────┐
│     TRIGGER RF LINK OR BEAM SWITCH FOR TERMINAL   │
│                      422                          │
└─────────────────────────────────────────────────┘
                        │
                        ▼
┌─────────────────────────────────────────────────┐
│     RESERVE TIME SLOTS FOR CROSSLINKED SATELLITES │
│                      424                          │
└─────────────────────────────────────────────────┘
                        │
                        ▼
┌─────────────────────────────────────────────────┐
│     TIME SLOTS ARE SYNCHRONIZED FOR THE TERMINAL  │
│                      426                          │
└─────────────────────────────────────────────────┘
                        │
                        ▼
┌─────────────────────────────────────────────────┐
│           TRIGGER SWITHOVER FROM RX TO TX         │
│                      428                          │
└─────────────────────────────────────────────────┘
```

# FIG. 4B

Connectivity Broker                                                                                     Hub

~430

Send Updated Beam
List to Hubs
431

Process Available Beam
and Determine Visible
Beam for Remote
Terminals
432

Any Beam
Available?
433

Y

Any Beam
Usable?
434

Y

435

N

N

Receive Selected Beam
From Hub at Specified
Interval
445

Inform Connectivity
Broker of Selection
444

443

Send Update to Hub with
Yes or No on Acquisition
of Beam
446

Full Request
Accepted?
447

Y

Process Received
List and Forward to
Remote Terminals
448

N

Update Hub Remote
Priority to Reflect What
Was Not Accepted
449

FIG. 4C

Hub

430

```
                 ┌──────────────┐      ┌──────────────┐        ┌──────────────┐      ┌──────────────┐
                 │ Any Remote   │  Y   │ If Beam Cannot│        │ Assign Beams │      │ Ranks and    │
434 ────────────▶│ Terminal     │─────▶│ Support       │        │ to Remote    │─────▶│ Prioritizes  │
                 │ Requesting   │      │ Multiple      │        │ Terminals    │      │ Beams Based  │
                 │ Same Beam?   │      │ Terminals then│        │ After        │      │ on Remote    │
                 │ 435          │      │ Priority      │        │ Iterative    │      │ Terminal     │
                 └──────────────┘      │ Ranking is    │        │ Process Which│      │ Metrics      │
                        │              │ Implemented   │        │ Have a List  │      │ 443          │
                        N              │ 436           │        │ of Beams to  │      └──────────────┘
                        │              └──────────────┘        │ Use 442      │             │
                        ▼                                       └──────────────┘             ▼
```

If Beam Cannot Support Multiple Terminals then Priority Ranking is Implemented  436

Assign Beams to Remote Terminals After Iterative Process Which Have a List of Beams to Use  442

Ranks and Prioritizes Beams Based on Remote Terminal Metrics  443

434

Any Remote Terminal Requesting Same Beam?  435

Any Remote Beam Request Matches Beam Exactly?  437

Assign Beam to that Remote Terminal  438

Any Remote Beam Request Meet Threshold?  439

Keep Remote Terminal Connected Regardless if Desired Beams Are Not Available  440

Some Beams Cannot Be Used  441

FIG. 4D

EP 3 535 873 B1

Hub | Remote Terminal

450

Send Updated Beam List to Remote Terminals
451

Process Received Beam List and Determine Whether Beam Viability is Still Valid
452

Any Beam Available?
453

Y

Beam List Still Same?
454

Y

Update Beam List with Remote Terminal Metrics
455

N

Reprioritize Based on Jitter, Latency, C/N, and Throughput
456

Receive Remote Terminal Beam List and Update Hub Beam List
459

Remote Terminal Informs Hub of Changes
457

At Broker Sync Hub Informed what Beams Used and Not Used Along with Obtaining New Beams
460

Prepare for Rx Make Before Tx Break
458

FIG. 4E

35

FIG. 4F

FWD window 1

FWD window 1

RTN slot 1

RTN slot 1

Acquire Second Link

FWD window 1

Multi-Track Acq
for Link 2

FWD window 1

Multi-Track Acq
for Link 2

RTN slot 1

RTN slot 1

Repeat until the new link has
been successfully acquired or
until the maximum number of
attempts is exceeded.

Burst into network upon
successful acquisition

Enter Assigned TS

FWD window 1

Burst into network

FWD window 1

FWD window 2

RTN slot 1

Burst slot 2

RTN slot 1

RTN slot 2

# FIG. 4G

FIG. 4H

Link 1 Transmit

Link 2 Transmit

Target Remote Terminal

461

Delay-Compensated
Time Window Closing
Detected
463

Maintain Normal
Operation
462

Route Remote Terminal
Traffic to Terminal
Buffer
464

Link 1 Path Delay
465

Receive Packets or
Frames
466

Update Estimated Peak
Pointing Vector for
Primary Link Based on
Signal Quality
467

Extract Header Timing
Bytes
463

Upcoming Delay-
Compensated Time
Window Detected
487

Update Timing Offset
for Primary Link
472

Maintain Normal
Operation
489

Update Self-Localization
Estimate
469

End of Time
Window?
453

N

Route Remote Terminal
Traffic From Buffer to
Active Outbound
Stream
488

Y

Link 2 Path Delay
429

480

Update Estimated Peak
Pointing Vector for Non-
Primary Links
470

Update Uncertainty
Region for Non-Primary
Links
471

Promote the Link Associated
with Next Time Window to
the Primary Tracking
Candidate
474

Expected Receive
Aperture
Blockage?
475

Y

N

476

FIG. 4I

39

Target Remote Terminal

475

461

Pause Tracking of
Primary Link
476

Repoint Receive Aperture Per
Estimated Peak Pointing
Vector for Primary Tracking
Candidate
477

Tune Tracking Solution
to the Primary Tracking
Candidate Signal
478

Tracking
Valid?
479    N

Y

429    Acquire Tracking
Candidate Signal
480    N

Acquisition
Successful?
483    N

Does Self-
Localization
Uncertainty Exceed
Threshold?
481    Y

466

Mark Tracking
Candidate Acquisition
Failure
482

Y

Promote Primary
Tracking Candidate to
Primary Link
484

Resume Normal
Operation on Primary Link
485

FIG. 4J

40

Link 1 Receive

Link 2 Receive

Target Remote Terminal

```
┌─────────────┐
│ Monitoring  │
│Incoming Traffic│
│    517      │
└─────────────┘
       │
       ▼
┌─────────────┐
│Report Terminal to│
│Network Management│
│   System    │
│    518      │
└─────────────┘
```

```
┌─────────────┐
│ Monitoring  │
│Incoming Traffic│
│    519      │
└─────────────┘
       │
       ▼
┌─────────────┐
│Report Terminal to│
│Network Management│
│   System    │
│    520      │
└─────────────┘
```

490

```
( Timing Update )
(      491      )
       │
       ▼
┌─────────────┐
│Update Current RTN│
│Slot and Next RTN Slot│
│for All Active Links│
│    492      │
└─────────────┘
       │
       ▼
    ╱ RTN Slot ╲      N      ( End )
   ⟨ Imminent?  ⟩ ────────── ( 494 )
    ╲   493   ╱
       │ Y
       ▼
504 ◄── ╱Is Terminal ╲
       ⟨Transmit in Use⟩
        ╲    495    ╱
            │ N
            ▼
```

```
┌─────────────┐
│Monitor Pointing│
│   Vector    │
│    511      │
└─────────────┘
       │
       ▼
   ╱ Does Pointing ╲    Y    ┌─────────────┐
  ⟨ Vector Violate a ⟩ ───── │Mute Transmit │
   ╲  No Transmit   ╱        │    513      │
    ╲    Zone?     ╱         └─────────────┘
     ╲    512    ╱                  │
       │ N                          │
       ▼                            │
┌─────────────┐                     │
│Monitor Tracking│                  │
│   State     │                     │
│    514      │                     │
└─────────────┘                     │
       │                            │
       ▼                            │
   ╱ Is the RTN Slot ╲              │
  ⟨  Link Tracking   ⟩ ◄───────────┘
   ╲ State Valid?    ╱
    ╲    515       ╱
       │ Y
       ▼
┌─────────────┐
│Unmute Transmit│
│    516      │
└─────────────┘
```

# FIG. 4K

EP 3 535 873 B1

FIG. 4L

42

530

ACTIVE TRACKING
STATE
532

Tracking Link Becomes Terminal Primary Link

Promotion of Tracking Link to Terminal Primary Link

Terminal Primary Link Transitions to Another
Tracking Link
Or
New Tracking Candidate Identified

PROJECTED
TRACKING
STATE
536

Extended Degraded Signal Blockage

Tracking Link Peak Pointing Vector
Exceeds Threshold
Or
Time Since Last Active Tracking
State Exceeds Threshold
Or
Terminal Unable to Acquire
Tracking Link When It Is Tracking
Candidate

INSUFFICIENT
TRACKING
STATE
534

FIG. 4M

FIG. 5A

FIG. 5B

FIG. 6

FIG. 7

FIG. 8

Iris L2

**FIG. 9A**

Iris L1

**FIG. 9B**

Patch and Iris L1

**FIG. 9C**

Top View

**FIG. 9D**

TERMINATION
1009

RF ARRAY
1006

DIELECTRIC LAYER
1005

INTERSTITIAL
CONDUCTOR
1003

45°

SIDES
1007

45°

45°

SIDES
1008

45°

SPACER
1004

GROUND PLANE
1002

COAXIAL PIN
1001

DIRECTION OF
TRAVELING
WAVE

**FIG. 10A**

GROUND PLANE
1011

DIRECTION OF
TRAVELING
WAVE

RF ARRAY
1016

RF ABSORBER
1013

RF ABSORBER
1014

GROUND PLANE
1010

COAXIAL PIN
1015

DIELECTRIC
1012

**FIG. 10B**

**FIG. 11**

**FIG. 12**

ROW TRACES
1301

COLUMN TRACES
1302

**FIG. 13**

SPIRAL
1401

SPIRAL
1402

SPIRAL
1403

SPIRAL
1413

SPIRAL
1412

SPIRAL
1411

**FIG. 14**

ADDITIONAL SPIRALS
1501

INITIAL SPIRALS
1502

**FIG. 15**

FIG. 16

**FIG.17**

FIG.18B

FIG.18A

ROW CONNECTOR

COLUMN CONNECTOR

1802

1801

FIG. 19

FIG.20B

FIG.20A

FIG.21

FIG. 22

FIG.23B

FIG.23A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160037434 A1
- US 6070051 A
- US 20140315560 A1
- US 20110143656 A1
- US 55017814
- US 61050215